# EUROPEAN PATENT APPLICATION

(11) **EP 4 679 925 A1**
(43) Date of publication of application: **14.01.2026**
(21) Application number: 24766462.6
(22) Date of filing: 06.03.2024
(51) Int. Cl.: H04W 74/00

(54) **METHOD AND APPARATUS USED IN COMMUNICATION NODE FOR WIRELESS COMMUNICATION**

(30) Priority: 09.03.2023 CN 202310225075; 18.02.2024 CN 202410182128
(71) Applicant: Apogee Networks, LLC, Dallas, TX 75201 (US)
(72) Inventor: YU, Qiaoling, Shanghai 201206 (CN); ZHANG, Xiaobo, Shanghai 201206 (CN)
(74) Representative: Gunzelmann, Rainer
(86) International application number: PCT/CN2024/080253
(87) International publication number: WO 2024/183747

(57) **Abstract**

The present application discloses a method and apparatus used in a communication node for wireless communication. The method comprises: the communication node initiating a first random access procedure; in the first random access procedure, transmitting a first signal; monitoring second signaling, wherein the first signal is used for triggering the second signaling, and the second signaling is used for determining a first time length; after the first signal is transmitted, increasing a first counter by 1; and in response to the first counter reaching a target integer, executing a first action set, wherein if the first time length is applied to only part of uplink transmission for a first cell, the first action set does not comprise determining a radio link failure, if the first time length is applied to the uplink transmission for the first cell, the first action set comprises determining the radio link failure, the first cell is an SpCell, and the uplink transmission comprises at least one of PUCCH transmission or PUSCH transmission or SRS transmission.

## Description

### Technical Field

The present application relates to a transmission method and apparatus used in a wireless communication system, in particular to a method and apparatus for determining a radio link failure.

### Background Art

The 3rd Generation Partner Project (3GPP) Radio Access Network (RAN) #94e meeting decided to study uplink multiple Transmit/Receive Point (multi-TRP/m-TRP) operations with two TAs (Timing Advances) in the Work Item entitled "MIMO Evolution for Downlink (DL) and Uplink (UL)". The 3GPP RAN#94e meeting decided to study Layer 1 (L1)/Layer 2 (L2) Triggered Mobility (L1/L2 Triggered Mobility, LTM), including timing advance management for candidate cells, in the Work Item (WI) entitled "Further NR (New Radio) mobility enhancements".

### Summary of the Invention

In the state of art, if a signal is used for triggering signaling comprising a TA, and the TA is used for uplink transmission for a Special Cell (SpCell), a counter that is increased by 1 after the signal is transmitted reaching an integer is used for determining a radio link failure (RLF). If a signal is used for triggering signaling comprising a TA, and the TA is used for only part of uplink transmission for an SpCell, the service performance would be impacted if a counter that is increased by 1 after the signal is transmitted reaching an integer is still used for determining a radio link failure. Therefore, for a scenario where a signal is used for triggering signaling comprising a TA used for only part of uplink transmission of an SpCell, enhancements are required regarding how to determine a radio link failure.

In view of the aforementioned problem, the present application provides a solution for determining a radio link failure. For the aforementioned problem, using an NR system as an example in the description, the present application is also applicable to scenarios such as a Long-Term Evolution (LTE) system or a future 3GPP system, and achieves technical effects similar to those obtained in the NR system. Further, although the present application provides a specific implementation for m-TRP, the present application can also be used for scenarios, for example, an LTM, and achieves technical effects similar to those obtained for m-TRP. Further, although the original intention of the present application is for a Uu air interface, the present application can also be used for a PC5 interface, and achieves technical effects similar to those of the Uu air interface. Further, although the original intention of the present application is for terminal and base station scenarios, the present application is also applicable to a V2X (Vehicle-to-Everything) scenario, as well as communication scenarios between terminals and relays and between relays and base stations, and achieves technical effects similar to those in the terminal and base station scenarios. Further, although the original intention of the present application is for terminal and base station scenarios, the present application is also applicable to a communication scenario of IAB (Integrated Access and Backhaul), and achieves technical effects similar to those in the terminal and base station scenarios. Further, although the original intention of the present application is for terrestrial network (TN) scenarios, the present application is also applicable to communication scenarios of non-terrestrial networks (NTNs), and achieves technical effects similar to those in the TN scenarios. In addition, the use of a unified solution for different scenarios also helps to reduce hardware complexity and costs.

As one embodiment, the interpretation of the terminologies in the present application refers to the definition of the specification protocol TS36 series of 3GPP.

As one embodiment, the interpretation of the terminologies in the present application refers to the definition of the specification protocol TS38 series of 3GPP.

As one embodiment, the interpretation of the terminologies in the present application refers to the definition of the specification protocol TS37 series of 3GPP.

As one embodiment, the interpretation of the terminologies in the present application refers to the definition of the specification protocol of IEEE (Institute of Electrical and Electronics Engineers).

It should be noted that, in the absence of conflicts, embodiments and features in the embodiments of any node of the present application may be applied to any other node. In the absence of conflicts, the embodiments and features in the embodiments of the present application may be arbitrarily combined with each other.

The present application discloses a method used in a first node for wireless communication, comprising:
Initiate a first random access procedure; in the first random access procedure, transmitting a first signal; monitoring second signaling, wherein the first signal is used for triggering the second signaling, and the second signaling is used for determining a first time length; after the first signal is transmitted, increasing a first counter by 1; and in response to the first counter reaching a target integer, executing a first action set, wherein whether the first action set comprises determining a radio link failure depends on uplink transmission to which at least the first time length is applied;
wherein if at least the first time length is applied to only part of the uplink transmission for a first cell, the first action set does not comprise determining a radio link failure, if the first time length is applied to the uplink transmission for the first cell, the first action set comprises determining the radio link failure, the first cell is an SpCell, and the uplink transmission comprises at least one of PUCCH transmission or PUSCH transmission or SRS transmission.

As one embodiment, whether the first action set comprises determining a radio link failure depends on uplink transmission to which the first time length is applied.

As one sub-embodiment of the above embodiment, if the first time length is applied to only part of uplink transmission for a first cell, the first action set does not comprise determining a radio link failure; and if the first time length is applied to the uplink transmission for the first cell, the first action set comprises determining the radio link failure.

As one sub-embodiment of the above embodiment, if the first time length is applied to the uplink transmission for a first cell, the first action set comprises determining a radio link failure; and otherwise, the first action set does not comprise determining the radio link failure.

As one embodiment, whether the first action set comprises determining a radio link failure depends on uplink transmission to which the first time length is applied and a timeAlignmentTimer associated with a TAG configured to the first cell.

As one sub-embodiment of the above embodiment, if the first time length is applied to only part of the uplink transmission for the first cell and at least one timeAlignmentTimer associated with a TAG configured to the first cell is running, the first action set does not comprise determining a radio link failure; if the first time length is applied to only part of the uplink transmission for the first cell and all timeAlignmentTimers associated with a TAG configured to the first cell are not running, the first action set comprises determining the radio link failure; and if the first time length is applied to the uplink transmission for the first cell, the first action set comprises determining the radio link failure.

As one sub-embodiment of the above embodiment, if the first time length is applied to the uplink transmission for the first cell or the first time length is applied to only part of the uplink transmission for the first cell and all timeAlignmentTimers associated with a TAG configured to the first cell are not running, the first action set comprises determining a radio link failure; and otherwise, the first action set does not comprise determining the radio link failure.

As one sub-embodiment of the above embodiment, if the first time length is applied to the uplink transmission for the first cell or the first time length is applied to only part of the uplink transmission for the first cell and the timeAlignmentTimer associated with a TAG configured to the first cell comprising the first cell is not running, the first action set comprises determining a radio link failure; and otherwise, the first action set does not comprise determining the radio link failure.

As one sub-embodiment of the above embodiment, if the first time length is applied to the uplink transmission for the first cell, the TAG configured to the first cell is associated with only one timeAlignmentTimer; and if the first time length is applied to only part of the uplink transmission for the first cell, the TAG configured to the first cell is associated with two timeAlignmentTimers.

As one embodiment, the problems to be solved in the present application comprise: how to determine a radio link failure if the first time length is applied to only part of the uplink transmission for a first cell.

As one embodiment, the characteristics of the above method comprise: if the first time length is applied to only part of the uplink transmission for a first cell, a radio link failure is not triggered by a first counter reaching a target integer.

As one embodiment, the characteristics of the above method comprise: if the first time length is applied to only part of the uplink transmission for a first cell, in response to the first counter reaching a target integer, the step of determining a radio link failure is not executed.

As one embodiment, the benefits of the above method comprise: reducing the impact on the service performance of the first node.

As one embodiment, the benefits of the above method comprise: avoiding triggering a radio link failure.

As one embodiment, the benefits of the above method comprise: avoiding triggering an unnecessary radio link failure.

As one embodiment, the benefits of the above method comprise: reducing data interruption caused by determining a radio link failure.

As one embodiment, the benefits of the above method comprise: reducing latency caused by determining a radio link failure.

According to one aspect of the present application, it is characterized in that the uplink transmission to which the first time length is applied is associated only with a first resource set of both the first resource set and a second resource set; at least one resource is included in the first resource set; at least one resource is included in the second resource set; the first resource set and the second resource set are both associated with the first cell; and the first time length is applied to the only part of the uplink transmission for the first cell.

According to one aspect of the present application, it is characterized in that the first resource set is not a reference resource set.

As one embodiment, the reference resource set is default in both the first resource set and the second resource set.

As one embodiment, the reference resource set is indicated in both the first resource set and the second resource set.

According to one aspect of the present application, it is characterized by comprising:
receiving first DCI, the first DCI being used for triggering the first random access procedure.

As one embodiment, the first DCI being used for triggering the first random access procedure is used for determining that the first time length is applied to the only part of the uplink transmission for the first cell; and the first time length is applied to the only part of the uplink transmission for the first cell.

As one embodiment, whether the first action set comprises determining a radio link failure depends on uplink transmission to which at least the first time length is applied and a source of the first DCI.

As one sub-embodiment of the above embodiment, whether the first action set comprises determining a radio link failure depends on the uplink transmission to which the first time length is applied and the source of the first DCI.

As one sub-embodiment of the above embodiment, the source of the first DCI refers to the cell on which the first DCI is received.

As one sub-embodiment of the above embodiment, if the first DCI is received on the first cell, the first DCI is from the first cell; and if the first DCI is received on a cell other than the first cell, the first DCI is from a cell other than the first cell.

As one sub-embodiment of the above embodiment, the first time length is applied to only part of the uplink transmission for the first cell, and the first DCI is from the first cell or a cell other than the first cell; and the first time length is applied to the uplink transmission for the first cell, and the first DCI is always from the first cell.

As one sub-embodiment of the above embodiment, if the first time length is applied to only part of the uplink transmission for the first cell and the first DCI is from a cell other than the first cell, the first action set does not comprise determining a radio link failure; and if the first time length is applied to the uplink transmission for the first cell, the first action set comprises determining the radio link failure.

As one sub-embodiment of the above embodiment, if the first time length is applied to only part of the uplink transmission for the first cell and the first DCI is from a cell other than the first cell, the first action set does not comprise determining a radio link failure; if the first time length is applied to only part of the uplink transmission for the first cell and the first DCI is from the first cell, the first action set comprises determining a radio link failure; and if the first time length is applied to the uplink transmission for the first cell, the first action set comprises determining the radio link failure.

As one sub-embodiment of the above embodiment, if the first time length is applied to the uplink transmission for the first cell, or the first time length is applied to only part of the uplink transmission for the first cell and the first DCI is from the first cell, the first action set comprises determining a radio link failure; and otherwise, the first action set does not comprise determining the radio link failure.

As one sub-embodiment of the above embodiment, the cell other than the first cell is the second cell in the present application.

As one sub-embodiment of the above embodiment, the above method triggers an RLF according to an SpCell.

As one sub-embodiment of the above embodiment, the above method facilitates an RLM.

As one sub-embodiment of the above embodiment, the above method avoids triggering an RLF due to a PDCCH order of a cell other than the first cell.

As one sub-embodiment of the above embodiment, the above method improves radio link performance.

As one embodiment, whether the first action set comprises determining a radio link failure depends on the uplink transmission to which at least the first time length is applied, the timeAlignmentTimer associated with the TAG configured to the first cell, and the source of the first DCI.

As one sub-embodiment of the above embodiment, whether the first action set comprises determining a radio link failure depends on uplink transmission to which the first time length is applied, the timeAlignmentTimer associated with the TAG configured to the first cell, and the source of the first DCI.

As one sub-embodiment of the above embodiment, whether the first action set comprises determining a radio link failure depends on uplink transmission to which the first time length is applied, the timeAlignmentTimer associated with the TAG configured to the first cell, and the source of the first DCI.

As one sub-embodiment of the above embodiment, if the first time length is applied to only part of the uplink transmission for the first cell and the first DCI is from a cell other than the first cell and the timeAlignmentTimer associated with a TAG configured to the first cell comprising the first cell is running, the first action set does not comprise determining a radio link failure; and otherwise, the first action set comprises determining the radio link failure.

As one sub-embodiment of the above embodiment, the above method further reduces the probability of triggering an RLF.

According to one aspect of the present application, it is characterized by comprising:
a first timer expiring, the first timer expiring being used for triggering the first random access procedure,
wherein the first timer expiring being used for triggering the first random access procedure is used for determining that the first time length is applied to the only part of the uplink transmission for the first cell; and the first time length is applied to the only part of the uplink transmission for the first cell.

According to one aspect of the present application, it is characterized in that if the first time length is applied to the only part of the uplink transmission for the first cell, the first action set comprises releasing at least part of the resources used for the only part of the uplink transmission for the first cell.

According to one aspect of the present application, it is characterized in that if the first time length is applied to the only part of the uplink transmission for the first cell, the first action set comprises transmitting first signaling; and the first signaling is used for indicating that the first random access procedure is not successfully completed.

According to one aspect of the present application, it is characterized in that if the first time length is applied to the only part of the uplink transmission for the first cell, the first action set comprises initiating a second random access procedure; and the second random access procedure is not the first random access procedure.

According to one aspect of the present application, it is characterized in that a second time length is applied to uplink transmission other than the only part of the uplink transmission for the first cell; the second time length is not the first time length; and the first time length is applied to the only part of the uplink transmission for the first cell.

According to one aspect of the present application, it is characterized in that the uplink transmission other than the only part of the uplink transmission for the first cell is available; and the first time length is applied to the only part of the uplink transmission for the first cell.

According to one aspect of the present application, it is characterized in that the target integer depends on the uplink transmission to which the first time length is applied; if the first time length is applied to the only part of the uplink transmission for the first cell, the target integer is a first integer; if the first time length is applied to the uplink transmission for the first cell, the target integer is a second integer; and the second integer is not the first integer.

The present application discloses a method used in a second node for wireless communication, comprising:
monitoring a first signal; and determining whether to transmit second signaling according to whether the first signal is received, wherein the first signal is used for triggering the second signaling, and the second signaling is used for determining a first time length,
wherein the first signal is transmitted in a first random access procedure; the first random access procedure is initiated by a sender of the first signal; after the first signal is transmitted, a first counter is increased by 1; the first counter reaching a target integer is used for determining that a first action set is executed by the sender of the first signal, wherein whether the first action set comprises determining a radio link failure depends on uplink transmission to which the first time length is applied, wherein if the first time length is applied to only part of uplink transmission for a first cell, the first action set does not comprise determining a radio link failure, if the first time length is applied to the uplink transmission for the first cell, the first action set comprises determining the radio link failure, the first cell is an SpCell, and the uplink transmission comprises at least one of PUCCH transmission or PUSCH transmission or SRS transmission.

According to one aspect of the present application, it is characterized in that the uplink transmission to which the first time length is applied is associated only with a first resource set of both the first resource set and a second resource set; at least one resource is included in the first resource set; at least one resource is included in the second resource set; the first resource set and the second resource set are both associated with the first cell; and the first time length is applied to the only part of the uplink transmission for the first cell.

According to one aspect of the present application, it is characterized in that the first resource set is not a reference resource set; and the reference resource set is default in both the first resource set and the second resource set, or the reference resource set is indicated in both the first resource set and the second resource set.

According to one aspect of the present application, it is characterized by comprising:
sending first DCI, the first DCI being used for triggering the first random access procedure,
wherein the first DCI being used for triggering the first random access procedure is used for determining that the first time length is applied to the only part of the uplink transmission for the first cell; and the first time length is applied to the only part of the uplink transmission for the first cell.

According to one aspect of the present application, it is characterized in that the first timer expiring is used for triggering the first random access procedure; and the first timer expiring being used for triggering the first random access procedure is used for determining that the first time length is applied to the only part of the uplink transmission for the first cell; and the first time length is applied to the only part of the uplink transmission for the first cell.

According to one aspect of the present application, it is characterized in that if the first time length is applied to the only part of the uplink transmission for the first cell, the first action set comprises releasing at least part of the resources used for the only part of the uplink transmission for the first cell.

According to one aspect of the present application, it is characterized in that if the first time length is applied to the only part of the uplink transmission for the first cell, the first action set comprises transmitting first signaling; and the first signaling is used for indicating that the first random access procedure is not successfully completed.

According to one aspect of the present application, it is characterized in that if the first time length is applied to the only part of the uplink transmission for the first cell, the first action set comprises initiating a second random access procedure; and the second random access procedure is not the first random access procedure.

According to one aspect of the present application, it is characterized in that a second time length is applied to uplink transmission other than the only part of the uplink transmission for the first cell; the second time length is not the first time length; and the first time length is applied to the only part of the uplink transmission for the first cell.

According to one aspect of the present application, it is characterized in that the uplink transmission other than the only part of the uplink transmission for the first cell is available; and the first time length is applied to the only part of the uplink transmission for the first cell.

According to one aspect of the present application, it is characterized in that the target integer depends on the uplink transmission to which the first time length is applied; if the first time length is applied to the only part of the uplink transmission for the first cell, the target integer is a first integer; if the first time length is applied to the uplink transmission for the first cell, the target integer is a second integer; and the second integer is not the first integer.

The present application discloses a first node used for wireless communication, comprising:
a first processing unit, initiating a first random access procedure; in the first random access procedure, transmitting a first signal; monitoring second signaling, wherein the first signal is used for triggering the second signaling, and the second signaling is used for determining a first time length; after the first signal is transmitted, increasing a first counter by 1; and in response to the first counter reaching a target integer, executing a first action set, wherein whether the first action set comprises determining a radio link failure depends on uplink transmission to which the first time length is applied,
wherein if the first time length is applied to only part of uplink transmission for a first cell, the first action set does not comprise determining the radio link failure, if the first time length is applied to the uplink transmission for the first cell, the first action set comprises determining the radio link failure, the first cell is an SpCell, and the uplink transmission comprises at least one of PUCCH transmission or PUSCH transmission or SRS transmission.

The present application discloses a second node used for wireless communication, comprising:
a second processing unit, monitoring a first signal; and determining whether to transmit second signaling according to whether the first signal is received, wherein the first signal is used for triggering the second signaling, and the second signaling is used for determining a first time length,
wherein the first signal is transmitted in a first random access procedure; the first random access procedure is initiated by a sender of the first signal; after the first signal is transmitted, a first counter is increased by 1; the first counter reaching a target integer is used for determining that a first action set is executed by the sender of the first signal, wherein whether the first action set comprises determining a radio link failure depends on uplink transmission to which the first time length is applied, wherein if the first time length is applied to only part of uplink transmission for a first cell, the first action set does not comprise determining a radio link failure, if the first time length is applied to the uplink transmission for the first cell, the first action set comprises determining the radio link failure, the first cell is an SpCell, and the uplink transmission comprises at least one of PUCCH transmission or PUSCH transmission or SRS transmission.

As one embodiment, compared with the traditional solution, the present application has the following advantages:
- . reducing the impact on the service performance of the first node, thereby improving the quality of service of the first node;
- . avoiding triggering a radio link failure;
- . avoiding triggering an unnecessary radio link failure;
- . reducing data interruption caused by determining a radio link failure;
- . reducing latency caused by determining a radio link failure.

### Brief Description of the Drawings

Other features, purposes and advantages of the present application will become more apparent from reading the detailed description of the non-limiting embodiments made with reference to the following drawings:
FIG. 1 shows a flowchart of transmission of a first signal and second signaling according to one embodiment of the present application;
FIG. 2 shows a schematic diagram of a network architecture according to one embodiment of the present application;
FIG. 3 shows a schematic diagram of an embodiment of a wireless protocol architecture for a user plane and a control plane according to one embodiment of the present application;
FIG. 4 shows a schematic diagram of a first communication device and a second communication device according to one embodiment of the present application;
FIG. 5 shows a flowchart of wireless signal transmission according to one embodiment of the present application;
FIG. 6 shows a flowchart of first DCI being used for triggering a first random access procedure according to one embodiment of the present application;
FIG. 7 shows a flowchart of a first timer expiring being used for triggering a first random access procedure according to one embodiment of the present application;
FIG. 8 shows a flowchart of a first action set comprising releasing at least part of resources used for only part of uplink transmission for a first cell according to one embodiment of the present application;
FIG. 9 shows a flowchart of a first action set comprising first signaling according to one embodiment of the present application;
FIG. 10 shows a flowchart of a first action set comprising initiating a second random access procedure according to one embodiment of the present application;
FIG. 11 shows a schematic diagram of uplink transmission to which a first time length is applied being associated only with a first resource set of both the first resource set and a second resource set according to one embodiment of the present application;
FIG. 12 shows a schematic diagram of a first resource set not being a reference resource set according to one embodiment of the present application;
FIG. 13 shows a schematic diagram of a second time length being applied to uplink transmission other than only part of uplink transmission for a first cell according to one embodiment of the present application;
FIG. 14 shows a schematic diagram of uplink transmission other than only part of uplink transmission for a first cell being available according to one embodiment of the present application;
FIG. 15 shows a schematic diagram of a target integer depending on uplink transmission to which a first time length is applied according to one embodiment of the present application;
FIG. 16 shows a structural block diagram of a processing device used in a first node according to one embodiment of the present application;
FIG. 17 shows a structural block diagram of a processing device used in a second node according to one embodiment of the present application; and
FIG. 18 shows a schematic diagram of a first time length and a second time length according to one embodiment of the present application;
FIG. 19 shows a schematic diagram of a first time length and a second time length according to another embodiment of the present application; and
FIG. 20 shows a schematic diagram of a first time length and a second time length according to yet another embodiment of the present application.

### Detailed Description of Embodiments

The technical solution of the present application will be further described in detail below in conjunction with the accompanying drawings. It should be noted that, in the absence of conflicts, embodiments and features in the embodiments of the present application may be arbitrarily combined with each other.

### Embodiment 1

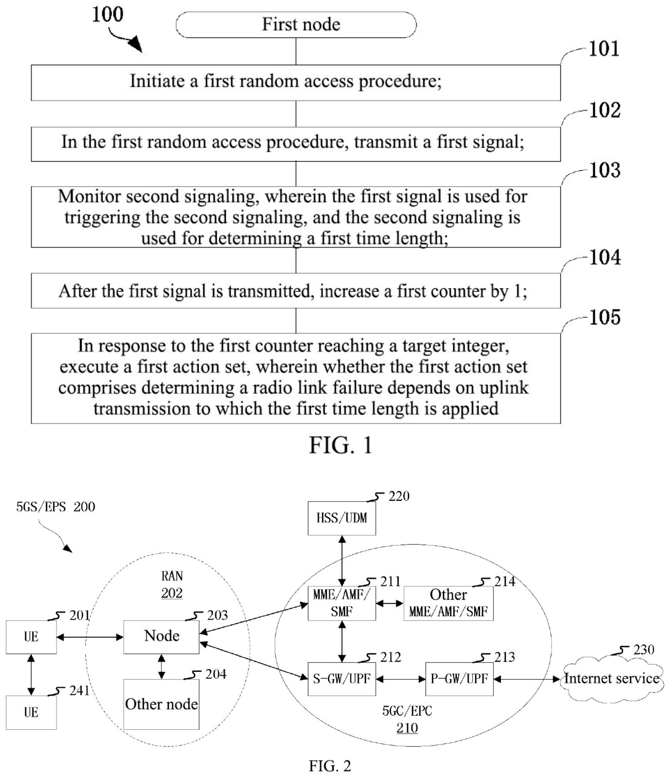

Embodiment 1 illustrates a flowchart of transmission of a first signal and second signaling according to one embodiment of the present application, as shown in FIG. 1. In FIG. 1, each block represents one step, and it should be particularly emphasized that the order of various blocks in the figure does not represent the chronological relationship between the steps represented.

In Embodiment 1, a first node in the present application initiates a first random access procedure in step 101; in step 102, in the first random access procedure, a first signal is transmitted; in step 103, second signaling is monitored, wherein the first signal is used for triggering the second signaling, and the second signaling is used for determining a first time length; in step 104, after the first signal is transmitted, a first counter is increased by 1; and in step 105, in response to the first counter reaching a target integer, a first action set is executed, wherein whether the first action set comprises determining a radio link failure depends on uplink transmission to which the first time length is applied; wherein if the first time length is applied to only part of uplink transmission for a first cell, the first action set does not comprise determining the radio link failure, if the first time length is applied to the uplink transmission for the first cell, the first action set comprises determining the radio link failure, the first cell is an SpCell, and the uplink transmission comprises at least one of PUCCH transmission or PUSCH transmission or SRS transmission.

As one embodiment, the first random access procedure is initiated in an RRC_CONNECTED state.

As one embodiment, the first random access procedure is initiated in an RRC_INACTIVE state.

As one embodiment, the first random access procedure is initiated on an MAC entity for a cell group to which the first cell belongs.

As one embodiment, the first random access procedure is initiated on an MAC entity associated for the first cell.

As one embodiment, the first random access procedure is one CFRA (Contention Free Random Access).

As one embodiment, the first random access procedure is one CBRA (Contention Based Random Access).

As one embodiment, the first random access procedure is one four-step random access (4-stepRA) procedure.

As one embodiment, the first random access procedure is one two-step random access (2-stepRA) procedure.

As one embodiment, the first signal is one Preamble.

As one embodiment, the first signal is one Physical Random Access Channel (PRACH) transmission.

As one embodiment, a recipient of the first signal is a maintenance base station of the first cell.

As one embodiment, a recipient of the first signal is a maintenance base station of a second cell.

As one embodiment, a sender of the second signaling is a maintenance base station of the first cell.

As one embodiment, a sender of the second signaling is a maintenance base station of the second cell.

As one embodiment, the second cell is configured to the first cell.

As one embodiment, the second cell is one candidate cell of the first cell.

As one embodiment, the Physical Cell Identifier (PCI) of the second cell is different from the PCI of the first cell.

As one embodiment, the second cell is indicated by one additionalPCI.

As one embodiment, the second cell is indicated by one additionalPCI-r17.

As one embodiment, the second cell is indicated by one AdditionalPCIIndex-r17.

As one embodiment, the first signal is used for calculating the first time length.

As one embodiment, the first signal is used for calculating the first time length and the second time length.

As one embodiment, the meaning of the monitoring is detecting.

As one embodiment, the meaning of monitoring is monitor.

As one embodiment, the meaning of monitoring is listening.

As one embodiment, the meaning of monitoring is determining existence.

As one embodiment, the second signaling is monitored on the first cell.

As one embodiment, the second signaling is monitored on the second cell.

As one embodiment, the second signaling is monitored on one search space of the first cell.

As one embodiment, the second signaling is monitored on one search space for the first cell.

As one embodiment, the behavior of monitoring the second signaling comprises: monitoring a Physical Downlink Control Channel (PDCCH) transmission identified by a first RNTI; and the PDCCH transmission identified by the first RNTI is used for scheduling the second signaling.

As one sub-embodiment of this embodiment, the first RNTI is a Cell Radio Network Temporary Identifier (C-RNTI) of the first node in the first cell.

As one sub-embodiment of this embodiment, being identified by the first RNTI refers to: a Cyclic Redundancy Check (CRC) is scrambled by the first RNTI.

As one sub-embodiment of this embodiment, being identified by the first RNTI refers to being addressed to the first RNTI.

As one sub-embodiment of this embodiment, the first RNTI is a C-RNTI of the first node in the first cell.

As one sub-embodiment of this embodiment, the first RNTI is a C-RNTI of the first node in a cell group to which the first cell belongs.

As one sub-embodiment of this embodiment, the first RNTI is one RA-RNTI, and the one RA-RNTI depends on a PRACH occasion used for transmitting the first signal.

As one sub-embodiment of this embodiment, the PDCCH transmission is DCI.

As one sub-embodiment of this embodiment, a format of the PDCCH transmission is DCI format 1_0.

As one sub-embodiment of this embodiment, a format of the PDCCH transmission is DCI format 1_1.

As one embodiment, in response to the first signal being transmitted, the second signaling is monitored.

As one embodiment, the first signal being transmitted is used for determining monitoring the second signaling.

As one embodiment, a first time window is started along with the first signal; and the second signaling is monitored during the running of the first time window.

As one sub-embodiment of this embodiment, the first time window is one ra-ResponseWindow.

As one sub-embodiment of this embodiment, the first time window is used for a Random Access Response (RAR).

As one embodiment, the second signaling is used for calculating the first time length.

As one embodiment, one index first T_{A} included in the second signaling is used for determining the first time length.

As one embodiment, the second signaling is one MAC RAR.

As one embodiment, the second signaling is one MAC Control Element (CE).

As one embodiment, the second signaling is one Timing Advance Command MAC CE.

As one embodiment, the second signaling is one Absolute Timing Advance Command MAC CE.

As one embodiment, the second signaling is one piece of Downlink Control Information (DCI).

As one embodiment, at least a Timing Advance Command field is included in the second signaling.

As one embodiment, a TAG ID field is included in the second signaling.

As one embodiment, a TAG ID field is not included in the second signaling.

As one embodiment, a first field is included in the second signaling, and the first field being used for determining the first time length is applied to the only part of the uplink transmission for the first cell.

As one embodiment, the first field is used for indicating one resource set.

As one embodiment, the first field is used for indicating the first resource set in the first resource set and the second resource set.

As one embodiment, the first field is used for indicating one TAG.

As one embodiment, the first field indicates one TAG ID.

As one embodiment, the first field occupies at least 1 bit.

As one embodiment, the first field occupies 2 bits.

As one embodiment, the first field occupies 3 bits.

As one embodiment, the first field occupies 4 bits.

As one embodiment, the first field is not included in the second signaling.

As one embodiment, only one Timing Advance Command field is included in the second signaling.

As one embodiment, at least one Timing Advance Command field is included in the second signaling.

As one embodiment, the at least one Timing Advance Command field is 1 Timing Advance Command field.

As one embodiment, the at least one Timing Advance Command field is 2 Timing Advance Command field.

As one embodiment, the at least one Timing Advance Command field is more than 2 Timing Advance Command fields.

As one embodiment, only one index first T_{A} is included in the second signaling, and the only one index first T_{A} is used for determining the first time length.

As one embodiment, at least one index T_{A} is included in the second signaling, and one index first T_{A} of the at least one index T_{A} is used for determining the first time length.

As one embodiment, the at least one index T_{A} is 1 index T_{A}.

As one embodiment, the at least one index T_{A} is 2 index T_{A}.

As one embodiment, the at least one index T_{A} is more than 2 index T_{A}.

As one embodiment, in response to the second signaling being received, a Timing Advance Command in the second signaling is applied.

As one embodiment, in response to the second signaling being received, a Timing Advance Command for the first TAG in the second signaling is applied.

As one embodiment, in response to the second signaling being received, a Timing Advance Command for each TAG in the second signaling is applied.

As one embodiment, the first time length is a time adjustment amount.

As one embodiment, the first time length is a time by which the start time of an uplink frame is advanced relative to the start time of a reference downlink frame.

As one embodiment, the first time length is a time by which the start time of an uplink frame for the uplink transmission for the first cell is advanced relative to the start time of a reference downlink frame; and the first time length is applied to the uplink transmission for a first cell.

As one embodiment, the first time length is a time by which the start time of an uplink frame for the only part of the uplink transmission for the first cell is advanced relative to the start time of a reference downlink frame; and the first time length is applied to the only part of the uplink transmission for the first cell.

As one embodiment, the first time length is (first N_{TA} + first N_{TA} offset) × T_{c};and the second signaling is used for determining the first N_{TA}.

As one embodiment, the first N_{TA} = first T_{A} · 16 · 64/2^{first µ}.

As one embodiment, the first N_{TA} = first N_{TA_old} + (first T_{A} - 31) · 16 · 64/2^{first µ}.

As one embodiment, the first µ is for the only part of the uplink transmission for the first cell.

As one embodiment, the first µ is used for determining a subcarrier spacing.

As one embodiment, the first µ is used for determining transmission numerologies.

As one embodiment, the first T_{c} is for the only part of the uplink transmission for the first cell.

As one embodiment, the first T_{c} is a basic timing unit.

As one embodiment, the first T_{c} is a basic timing unit defined in 3GPP TS 38.211.

As one embodiment, the first counter is used for counting the number of Preamble transmission.

As one embodiment, the first counter is a counter of one MAC sublayer.

As one embodiment, the first counter is a PREAMBLE_TRANSMISSION_COUNTER.

As one embodiment, within the time interval between the behavior of transmitting a first signal and the behavior of increasing a first counter by 1, any Preamble other than the first signal is not initiated.

As one embodiment, within the time interval between the behavior of transmitting a first signal and the behavior of increasing a first counter by 1, executing a random access resource selection procedure is not initiated.

As one embodiment, within the time interval between the behavior of transmitting a first signal and the behavior of increasing a first counter by 1, the first counter is not increased.

As one embodiment, after the first signal is transmitted, it is considered that the Random Access Response reception is not successful; and in response to the behavior of considering the Random Access Response reception not successful, the first counter is increased by 1.

As one sub-embodiment of this embodiment, the behavior "after the first signal is transmitted, the first counter is increased by 1" means that: in response to the behavior of considering the Random Access Response reception not successful, the first counter is increased by 1.

As one sub-embodiment of this embodiment, in response to the first time window expiring, it is considered that the Random Access Response reception is not successful.

As one embodiment, after the first signal is transmitted, it is considered that the Contention Resolution is not successful; and in response to the behavior of considering the Contention Resolution not successful, the first counter is increased by 1.

As one sub-embodiment of this embodiment, the behavior "after the first signal is transmitted, the first counter is increased by 1" means that: in response to the behavior of considering the Contention Resolution not successful, the first counter is increased by 1.

As one sub-embodiment of this embodiment, after the first signal is transmitted, the second signaling is received; in response to the second signaling being received, one Msg3 is transmitted; one ra-ContentionResolutionTimer is started or restarted along with the behavior of one Msg3 being transmitted; and in response to the one ra-ContentionResolutionTimer expiring, it is considered that the Contention Resolution is not successful.

As one sub-embodiment of this embodiment, the second signaling is received during the running of the first time window.

As one sub-embodiment of this embodiment, one C-RNTI MAC CE is included in the one Msg3, and a C-RNTI of the first node in the first cell is included in the one C-RNTI MAC CE.

As one embodiment, the first counter reaching the target integer is used for triggering the first action set.

As one embodiment, the first counter reaching the target integer triggers the first action set.

As one embodiment, the phrase "in response to the first counter reaching a target integer" comprises: when the first counter reaches the target integer.

As one embodiment, the phrase "in response to the first counter reaching a target integer" comprises: at least after the first counter reaches the target integer.

As one embodiment, the phrase "in response to the first counter reaching a target integer" comprises: once the first counter reaches the target integer.

As one embodiment, the phrase "in response to the first counter reaching a target integer" comprises: if the first counter reaches the target integer.

As one embodiment, the first counter reaching the target integer refers to: the target counter is equal to the target integer.

As one embodiment, the first counter reaching the target integer refers to: the target counter is not less than the target integer.

As one embodiment, the target integer is configurable.

As one embodiment, the target integer is preconfigured.

As one embodiment, the target integer is preambleTransMax + 1.

As one embodiment, the target integer does not depend on uplink transmission to which the first time length is applied.

As one embodiment, the meaning of the behavior of executing a first action set comprises: the first action set is triggered.

As one embodiment, a triggering event of the first random access procedure is used for determining whether the first time length is applied to the uplink transmission for the first cell or the only part of the uplink transmission for the first cell.

As one sub-embodiment of this embodiment, if the first random access procedure is for the uplink transmission of a TAG to which the first cell belongs, the first time length is applied to the uplink transmission for the first cell.

As one sub-embodiment of this embodiment, if the first random access procedure is for the only part of the uplink transmission for the first cell, the first time length is applied to the only part of the uplink transmission for the first cell.

As one sub-embodiment of this embodiment, if the first random access procedure is not triggered by a PDCCH order, the first time length is applied to the uplink transmission for the first cell.

As one sub-embodiment of this embodiment, if the first random access procedure is triggered by a PDCCH order, the first time length is applied to the only part of the uplink transmission for the first cell.

As one embodiment, the first signal is used for determining whether the first time length is applied to the uplink transmission for the first cell or the only part of the uplink transmission for the first cell.

As one sub-embodiment of this embodiment, if the first signal is associated with the first cell, the first time length is applied to the uplink transmission for the first cell.

As one sub-embodiment of this embodiment, if the first signal is associated with the first resource set, the first time length is applied to the only part of the uplink transmission for the first cell.

As one embodiment, the number of TAGs configured to the first cell is used for determining whether the first time length is applied to the uplink transmission for the first cell or the only part of the uplink transmission for the first cell.

As one sub-embodiment of this embodiment, if only 1 TAG is configured to the first cell, the first time length is applied to the uplink transmission for the first cell.

As one sub-embodiment of this embodiment, if more than 1 TAG is configured to the first cell, the first time length is applied to the only part of the uplink transmission for the first cell.

As one embodiment, a format of the second signaling is used for determining whether the first time length is applied to the uplink transmission for the first cell or the only part of the uplink transmission for the first cell.

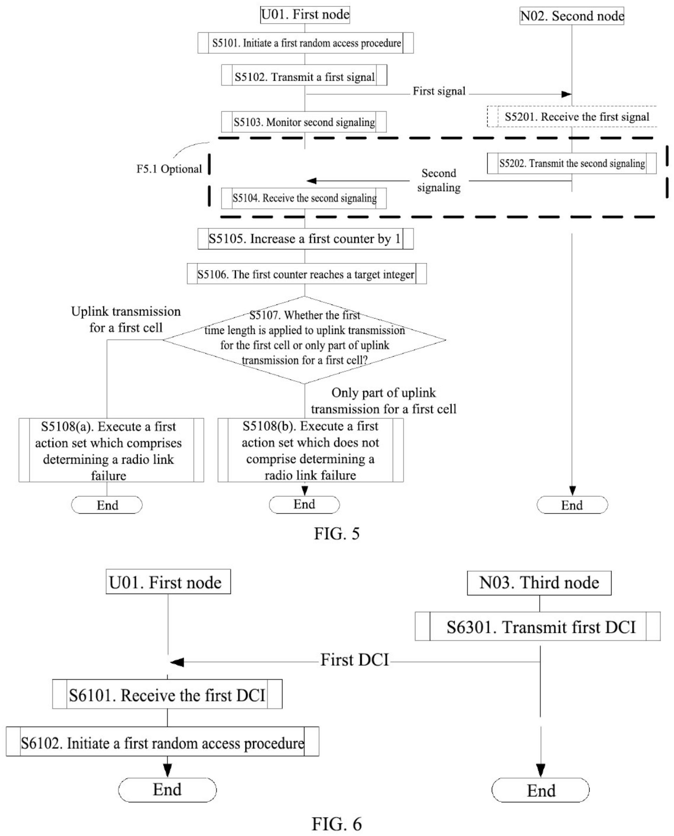

As one sub-embodiment of this embodiment, if the second signaling is an MAC RAR with the format shown in FIG. 6.2.3-1 in Section 6.2.3 of 3GPP TS 38.321, the first time length is applied to the uplink transmission for the first cell.

As one sub-embodiment of this embodiment, if the second signaling is not an MAC RAR with the format shown in FIG. 6.2.3-1 in Section 6.2.3 of 3GPP TS 38.321, the first time length is applied to the only part of the uplink transmission for the first cell.

As one sub-embodiment of this embodiment, if the second signaling is identified by an MAC subheader with the format shown in FIG. 6.1.5-2 in Section 6.1.5 of 3GPP TS 38.321, the first time length is applied to the uplink transmission for the first cell.

As one sub-embodiment of this embodiment, if the second signaling is not identified by an MAC subheader with the format shown in FIG. 6.1.5-2 in Section 6.1.5 of 3GPP TS 38.321, the first time length is applied to the only part of the uplink transmission for the first cell.

As one embodiment, the number of TAGs associated with the first cell is used for determining whether the first time length is applied to the uplink transmission for the first cell or the only part of the uplink transmission for the first cell; and the first time length is applied to the first TAG.

As one sub-embodiment of this embodiment, if the number of TAGs associated with the first cell is equal to 1, the first time length is applied to the uplink transmission for the first cell.

As one sub-embodiment of this embodiment, if the number of TAGs associated with the first cell is more than 1, the first time length is applied to the only part of the uplink transmission for the first cell.

As one embodiment, the first cell belongs to a PTAG; and the first time length is applied to the uplink transmission for the first cell.

As one sub-embodiment of this embodiment, the PTAG is default.

As one sub-embodiment of this embodiment, the identifier of the PTAG is equal to 0.

As one embodiment, the only part of the uplink transmission in the first cell belongs to the PTAG; and the first time length is applied to the only part of the uplink transmission for the first cell.

As one sub-embodiment of this embodiment, the PTAG is configured.

As one sub-embodiment of this embodiment, the only part of the uplink transmission in the first cell is configured to the PTAG.

As one embodiment, the indication method of a PTAG is used for determining whether the first time length is applied to the uplink transmission for the first cell or the only part of the uplink transmission for the first cell; and the first time length is applied to the first TAG.

As one sub-embodiment of this embodiment, if the PTAG is default, the first time length is applied to the uplink transmission for the first cell.

As one sub-embodiment of this embodiment, if the PTAG is configured, the first time length is applied to the only part of the uplink transmission for the first cell.

As one sub-embodiment of this embodiment, if the identifier of the PTAG is directly configured in the ServingCellConfig IE for the first cell, the first time length is applied to the uplink transmission for the first cell.

As one sub-embodiment of this embodiment, if the identifier of the PTAG is not directly configured in the ServingCellConfig IE for the first cell, the first time length is applied to the only part of the uplink transmission for the first cell.

As one embodiment, the first time length being applied to the only part of the uplink transmission for the first cell means that: the first time length is applied to the uplink transmission of part of the Transmission Configuration Indicator (TCI) state for the first cell.

As one embodiment, the first time length being applied to the only part of the uplink transmission for the first cell means that: the first time length is applied to the uplink transmission of part of the UL TCI state for the first cell.

As one embodiment, the first time length being applied to the only part of the uplink transmission for the first cell means that: the first time length is applied to the uplink transmission of part of the joint TCI state for the first cell.

As one embodiment, the first time length being applied to the only part of the uplink transmission for the first cell means that: the first time length is applied to the uplink transmission of part of the Control Resource Set (CORESET) Pool Index for the first cell.

As one embodiment, the first time length being applied to the only part of the uplink transmission for the first cell means that: the first time length is applied to the uplink transmission of part of the CORESET Pool Index for the first cell.

As one embodiment, the first time length being applied to the only part of the uplink transmission for the first cell means that: the first time length is applied to the uplink transmission associated with the first resource set for the first cell.

As one embodiment, the first time length being applied to the only part of the uplink transmission for the first cell means that: the first time length is applied to the uplink transmission associated with only the former of both the first resource set and the second resource set.

As one embodiment, the first time length being applied to the only part of the uplink transmission for the first cell means that: the first time length is applied to the uplink transmission associated with only the former of both the first TAG and the second TAG.

As one embodiment, the first time length being applied to the uplink transmission for the first cell means that: the first time length is applied to any uplink transmission of the first cell.

As one embodiment, the first time length being applied to the uplink transmission for the first cell means that: the first time length being applied to the uplink transmission of the first cell is unrelated to the TCI state.

As one embodiment, the first time length being applied to the uplink transmission for the first cell means that: the first time length being applied to the uplink transmission of the first cell is unrelated to the CORESET Pool Index.

As one embodiment, as long as the first time length is applied to the only part of the uplink transmission for the first cell, a radio link failure is not triggered when the first counter reaches the first integer.

As one embodiment, if the first time length is applied to the only part of the uplink transmission for the first cell, the first action set comprises: an MAC sublayer of the first node transmitting one second indication to a higher layer of the first node; and not determining a radio link failure when an RRC sublayer of the first node receives the second indication.

As one sub-embodiment of this embodiment, the first action set comprises an MAC sublayer of the first node transmitting one second indication to a higher layer of the first node, and the first action set does not comprise determining a radio link failure.

As one sub-embodiment of this embodiment, the first action set comprises an MAC sublayer of the first node transmitting one second indication to a higher layer of the first node and an RRC sublayer of the first node receiving the second indication, and the first action set does not comprise determining a radio link failure.

As one sub-embodiment of this embodiment, when an RRC sublayer of the first node receives the second indication, T300, T301, T304, T311 and T319 are all not running, and an SDT procedure is not executed.

As one sub-embodiment of this embodiment, when an RRC sublayer of the first node receives the second indication, and T300, T301, T304, T311 and T319 are all not running, and an SDT procedure is not executed, and the first time length is applied to the only part of the uplink transmission for the first cell, a radio link failure is not determined.

As one embodiment, if the first time length is applied to the only part of the uplink transmission for the first cell, the first action set does not comprise an MAC sublayer of the first node transmitting one second indication to a higher layer of the first node.

As one sub-embodiment of this embodiment, an MAC sublayer of the first node not transmitting the second indication to a higher layer of the first node is used for determining that the first action set does not comprise determining a radio link failure.

As one sub-embodiment of this embodiment, an RRC sublayer of the first node not receiving the second indication is used for determining that the first action set does not comprise determining a radio link failure.

As one embodiment, the second indication is one Random Access problem indication.

As one embodiment, the second indication is used for indicating a Random Access problem.

As one embodiment, the second indication is one Random Access problem indication for one resource set.

As one embodiment, the second indication is used for indicating a Random Access problem for one resource set.

As one embodiment, the second indication is used for indicating a Random Access problem for one TRP.

As one embodiment, the first time length being applied to the only part of the uplink transmission for the first cell means that: the uplink transmission to which the first time length is applied is only associated with a first resource set of both the first resource set and a second resource set.

As one embodiment, the uplink transmission associated with the second resource set being available is used for determining that the first action set does not comprise determining a radio link failure.

As one embodiment, if the uplink transmission associated with the second resource set is available, a second time length is applied to the uplink transmission associated with the second resource set.

As one embodiment, the meaning of the phrase "the first action set does not comprise determining a radio link failure" comprises: the behavior of determining a radio link failure is not triggered.

As one embodiment, if the first time length is applied to the uplink transmission for the first cell, the first action set comprises: an MAC sublayer of the first node transmitting a first indication to a higher layer of the first node; and determining a radio link failure when an RRC sublayer of the first node receives the first indication.

As one sub-embodiment of this embodiment, the first action set comprises an MAC sublayer of the first node transmitting a first indication to a higher layer of the first node, and the first action set comprises determining a radio link failure.

As one sub-embodiment of this embodiment, the first action set comprises an MAC sublayer of the first node transmitting a first indication to a higher layer of the first node and an RRC sublayer of the first node receiving the first indication, and the first action set comprises determining a radio link failure.

As one sub-embodiment of this embodiment, when an RRC sublayer of the first node receives the first indication, T300, T301, T304, T311 and T319 are all not running, and an SDT procedure is not executed.

As one sub-embodiment of this embodiment, when an RRC sublayer of the first node receives the first indication, and T300, T301, T304, T311 and T319 are all not running, and an SDT procedure is not executed, and the first time length is applied to the uplink transmission for the first cell, a radio link failure is determined.

As one embodiment, transmitting a first indication refers to: indicating one Random Access problem.

As one embodiment, the first indication is an indication of one Random Access problem.

As one embodiment, the first indication is one Random Access problem indication.

As one embodiment, the first indication is used for indicating a random access problem.

As one embodiment, the second indication is the first indication.

As one embodiment, the second indication is not the first indication.

As one embodiment, the behavior of determining a radio link failure refers to: considering that a radio link failure occurs.

As one embodiment, the behavior of determining a radio link failure refers to: considering that a radio link failure occurs to the first cell.

As one embodiment, the behavior of determining a radio link failure refers to: considering that a radio link failure occurs to a cell group to which the first cell belongs.

As one embodiment, the radio link failure refers to Radio Link Failure (RLF).

As one embodiment, the radio link failure is used for triggering an RRC connection reestablishment.

As one embodiment, the radio link failure is used for triggering the entry into an RRC_IDLE state.

As one embodiment, the first cell is a Primary Cell (PCell).

As one embodiment, the first cell is a PCell, and a cell group to which the first cell belongs is a Master Cell Group (MCG).

As one embodiment, the first cell is a Primary SCG Cell (PSCell).

As one embodiment, the first cell is a PSCell, and a cell group to which the first cell belongs is a Secondary Cell Group (SCG).

As one embodiment, the uplink transmission is configured to the first cell.

As one embodiment, the uplink transmission is configured to one uplink carrier of the first cell.

As one embodiment, the uplink transmission is configured to any uplink carrier of the first cell.

As one embodiment, the uplink transmission is configured to one BWP of the first cell.

As one embodiment, the uplink transmission is configured to any BWP of the first cell.

As one embodiment, the uplink transmission is configured to one BWP of one uplink carrier of the first cell.

As one embodiment, the uplink transmission is configured to any BWP of any uplink carrier of the first cell.

As one embodiment, the uplink transmission comprises any uplink transmission other than PRACH transmission.

As one embodiment, the uplink transmission comprises at least one of Physical Uplink Control Channel (PUCCH) transmission or Physical Uplink Shared Channel (PUSCH) transmission or Sounding Reference Signal (SRS) transmission.

As one embodiment, the uplink transmission is at least one of PUCCH transmission or PUSCH transmission or SRS transmission.

As one embodiment, the uplink transmission is PUCCH transmission.

As one embodiment, the uplink transmission is PUSCH transmission.

As one sub-embodiment of this embodiment, the PUSCH transmission is Dynamic Grant (DG) PUSCH transmission.

As one sub-embodiment of this embodiment, the PUSCH transmission is Configured Grant (CG) PUSCH transmission.

As one sub-embodiment of this embodiment, the PUSCH transmission is CG Type 1 PUSCH transmission.

As one sub-embodiment of this embodiment, the PUSCH transmission is CG Type 2 PUSCH transmission.

As one sub-embodiment of this embodiment, the PUSCH transmission comprises at least one of DG PUSCH or CG Type 1 PUSCH transmission, or CG Type 2 PUSCH transmission.

As one embodiment, the uplink transmission refers to SRS transmission.

As one sub-embodiment of this embodiment, the SRS transmission is Aperiodic (AP) SRS transmission.

As one sub-embodiment of this embodiment, the SRS transmission is Semi-Persistent (SP) SRS transmission.

As one sub-embodiment of this embodiment, the SRS transmission is Periodic (P) SRS transmission.

As one sub-embodiment of this embodiment, the SRS transmission comprises at least one of AP SRS transmission, or SP SRS transmission, or P SRS transmission.

As one embodiment, the TAG is a timing advance group.

As one embodiment, the TAG is a time alignment group.

### Embodiment 2

Embodiment 2 illustrates a schematic diagram of a network architecture according to one embodiment of the present application, as shown in FIG. 2. FIG. 2 illustrates a network architecture 200 of a 5G NR (New Radio)/LTE (Long-Term Evolution)/LTE-A (Long-Term Evolution Advanced) system. The 5G NR/LTE/LTE-A network architecture 200 may be referred to as a 5GS (5G System)/EPS (Evolved Packet System) 200 or some other suitable terminologies. The 5GS/EPS 200 comprises at least one of UE (User Equipment) 201, an RAN (Radio Access Network) 202, a 5GC (5G Core Network)/EPC (Evolved Packet Core) 210, an HSS (Home Subscriber Server)/UDM (Unified Data Management) 220, and an Internet service 230. The 5GS/EPS may be interconnected with other access networks, but these entities/interfaces are not shown for simplicity. As shown, the 5GS/EPS provides packet switching services, but those skilled in the art will readily appreciate that the various concepts presented throughout the present application may be extended to networks that provide circuit switching services or other cellular networks. The RAN comprises a node 203 and other nodes 204. The node 203 provides user and control plane protocol termination towards the UE201. The node 203 may be connected to other nodes 204 via an Xn interface (e.g., backhaul)/X2 interface. The node 203 may also be referred to as a base station, a base transceiver station, a radio base station, a radio transceiving device, a transceiving device function, a basic service set (BSS), an extended service set (ESS), a TRP (transmitter receiver point), or some other suitable terminologies. The node 203 provides an access point to the 5GC/EPC210 for the UE201. Examples of the UE201 comprise a cellular phone, a smart phone, a session initiation protocol (SIP) phone, a laptop computer, a personal digital assistant (PDA), a satellite radio, a non-terrestrial base station communication, a satellite mobile communication, a global positioning system, a multimedia apparatus, a video apparatus, a digital audio player (e.g., an MP3 player), a camera, a game console, a drone, an aircraft, a narrowband Internet of Things device, a machine type communication device, a land vehicle, an automobile, a wearable device, or any other similarly functional apparatuses. Those skilled in the art may also refer to the UE201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terminologies. The node 203 is connected to the 5GC/EPC210 via an S1/NG interface. The 5GC/EPC210 comprises an MME (Mobility Management Entity)/AMF (Authentication Management Field)/SMF (Session Management Function) 211, other MME/AMF/SMF214, an S-GW (Service Gateway)/UPF (User Plane Function) 212, and a P-GW (Packet Data Network Gateway)/UPF213. The MME/AMF/SMF211 is a control node that processes signaling between the UE201 and the 5GC/EPC210. Generally, the MME/AMF/SMF211 provides bearer and connection management. All user IP (Internet Protocol) packets are transmitted through the S-GW/UPF212, and the S-GW/UPF212 is connected to the P-GW/UPF213 by itself. The P-GW provides UE IP address allocation and other functions. The P-GW/UPF213 is connected to the Internet service 230. The Internet service 230 comprises Internet protocol services corresponding to operators, which may specifically comprise the Internet, an intranet, an IMS (IP Multimedia Subsystem), and a packet switching streaming service.

As one embodiment, the UE201 corresponds to a first node in the present application.

As one embodiment, the UE201 is one piece of user equipment (UE).

As one embodiment, the node 203 corresponds to the second node in the present application.

As one embodiment, the node 203 is one base station device (BaseStation, BS).

As one embodiment, the node 203 is one base transceiver station (BTS).

As one embodiment, the node 203 is one node B (NodeB, NB).

As one embodiment, the node 203 is one gNB.

As one embodiment, the node 203 is one eNB.

As one embodiment, the node 203 is one ng-eNB.

As one embodiment, the node 203 is one en-gNB.

As one embodiment, the node 203 is one CU (Centralized Unit).

As one embodiment, the node 203 is one DU (Distributed Unit).

As one embodiment, the node 203 is user equipment.

As one embodiment, the node 203 is one relay.

As one embodiment, the node 203 is a gateway.

As one embodiment, the user equipment supports transmission in a non-terrestrial network (NTN).

As one embodiment, the user equipment supports transmission in a terrestrial network (TN).

As one embodiment, the user equipment supports transmission in a network with a large-latency difference.

As one embodiment, the user equipment supports dual connection (DC) transmission.

As one embodiment, the user equipment comprises an aircraft.

As one embodiment, the user equipment comprises a vehicle terminal.

As one embodiment, the user equipment comprises a ship.

As one embodiment, the user equipment comprises an Internet of Things terminal.

As one embodiment, the user equipment comprises an industrial Internet of Things terminal.

As one embodiment, the user equipment comprises a device supporting low-latency and high-reliability transmission.

As one embodiment, the user equipment comprises a test device.

As one embodiment, the user equipment comprises a signaling tester.

As one embodiment, the base station device supports transmission in the non-terrestrial network.

As one embodiment, the base station device supports transmission in the network with a large-latency difference.

As one embodiment, the base station device supports transmission in the terrestrial network.

As one embodiment, the base station device comprises a macro cellular base station.

As one embodiment, the base station device comprises a micro cell base station.

As one embodiment, the base station device comprises a pico cell base station.

As one embodiment, the base station device comprises a Femtocell.

As one embodiment, the base station device comprises the base station device supporting a large-latency difference.

As one embodiment, the base station device comprises a flying platform device.

As one embodiment, the base station device comprises a satellite device.

As one embodiment, the base station device comprises a TRP (Transmitter Receiver Point).

As one embodiment, the base station device comprises a CU.

As one embodiment, the base station device comprises a DU.

As one embodiment, the base station device comprises a test device.

As one embodiment, the base station device comprises a signaling tester.

As one embodiment, the base station device comprises an IAB (Integrated Access and Backhaul)-node.

As one embodiment, the base station device comprises an IAB-donor.

As one embodiment, the base station device comprises an IAB-donor-CU.

As one embodiment, the base station device comprises an IAB-donor-DU.

As one embodiment, the base station device comprises an IAB-DU.

As one embodiment, the base station device comprises an IAB-MT.

As one embodiment, the relay comprises a relay.

As one embodiment, the relay comprises an L3 relay.

As one embodiment, the relay comprises an L2 relay.

As one embodiment, the relay comprises a router.

As one embodiment, the relay comprises a switch.

As one embodiment, the relay comprises user equipment.

As one embodiment, the relay comprises a base station device.

### Embodiment 3

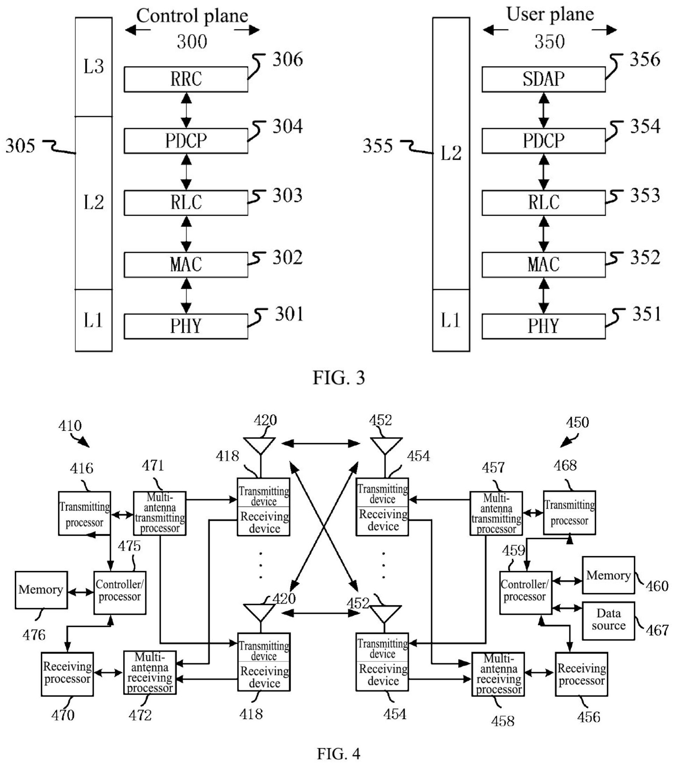

Embodiment 3 shows a schematic diagram of an embodiment of a wireless protocol architecture for a user plane and a control plane according to the present application, as shown in FIG. 3. FIG. 3 is a schematic diagram illustrating an embodiment of a radio protocol architecture for a user plane 350 and a control plane 300. FIG. 3 shows the radio protocol architecture for the control plane 300 using three layers: a Layer 1, a Layer 2, and a Layer 3. The Layer 1 (L1 layer) is the lowest layer and implements various PHY (physical layer) signal processing functions. The L1 layer will be referred to as a PHY301 herein. The Layer 2 (L2 layer) 305 is above the PHY301 and comprises an MAC (Medium Access Control) sublayer 302, an RLC (Radio Link Control) sublayer 303, and a PDCP (Packet Data Convergence Protocol) sublayer 304. The PDCP sublayer 304 provides multiplexing between different radio bearers and logical channels. The PDCP sublayer 304 also provides security by encrypting data packets, and provides handover support. The RLC sublayer 303 provides segmentation and reassembly of upper-layer data packets, retransmission of lost data packets, and reordering of data packets to compensate for out-of-order reception due to an HARQ (Hybrid Automatic Repeat Request). The MAC sublayer 302 provides multiplexing between logical and transmission channels. The MAC sublayer 302 is also responsible for allocating various radio resources (e.g., resource blocks) in a cell. The MAC sublayer 302 is also responsible for HARQ operations. An RRC (Radio Resource Control) sublayer 306 in the Layer 3 (L3 layer) in the control plane 300 is responsible for obtaining radio resources (i.e., radio bearers) and configuring lower layers using RRC signaling. The radio protocol architecture for the user plane 350 comprises a Layer 1 (L1 layer) and a Layer 2 (L2 layer). The radio protocol architecture in the user plane 350 is substantially the same as the corresponding layers and sublayers in the control plane 300 for a physical layer 351, a PDCP sublayer 354 in an L2 layer 355, an RLC sublayer 353 in the L2 layer 355, and an MAC sublayer 352 in the L2 layer 355, but the PDCP sublayer 354 also provides header compression for the upper-layer data packets to reduce radio transmission overhead. The L2 layer 355 in the user plane 350 also comprises an SDAP (Service Data Adaptation Protocol) sublayer 356, and the SDAP sublayer 356 is responsible for mapping between a QoS stream and a data radio bearer (DRB) to support the diversity of services.

As one embodiment, the wireless protocol architecture in FIG. 3 is applicable to the first node in the present application.

As one embodiment, the wireless protocol architecture in FIG. 3 is applicable to the second node in the present application.

As one embodiment, the first signal in the present application is generated in the PHY301 or PHY351.

As one embodiment, the second signaling in the present application is generated in the PHY301 or PHY351.

As one embodiment, the second signaling in the present application is generated in the RRC306.

As one embodiment, the second signaling in the present application is generated in the MAC302 or MAC352.

As one embodiment, the first DCI in the present application is generated in the PHY301 or PHY351.

### Embodiment 4

Embodiment 4 shows a schematic diagram of a first communication device and a second communication device according to the present application, as shown in FIG. 4. FIG. 4 is a block diagram of a first communication device 450 and a second communication device 410 communicating with each other in an access network.

The first communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454, and an antenna 452.

The second communication device 410 comprises a controller/processor 475, a memory 476, a receiving processor 470, a transmitting processor 416, a multi-antenna receiving processor 472, a multi-antenna transmitting processor 471, a transmitting device/receiving device 418, and an antenna 420.

In transmission from the second communication device 410 to the first communication device 450, at the second communication device 410, upper-layer data packets from a core network are provided to the controller/processor 475. The controller/processor 475 implements the functionality of an L2 layer. In the transmission from the second communication device 410 to the first communication device 450, the controller/processor 475 provides header compression, encryption, packet segmentation and reordering, multiplexing between logical and transport channels, and radio resource allocation to the first communication device 450 based on various priority metrics. The controller/processor 475 is also responsible for retransmission of lost packets and signaling to the first communication device 450. The transmitting processor 416 and the multi-antenna transmitting processor 471 implement various signal processing functions for an L1 layer (i.e., physical layer). The transmitting processor 416 implements encoding and interleaving to facilitate forward error correction (FEC) at the second communication device 410, as well as mapping of signal constellations based on various modulation schemes (e.g., binary phase shift keying (BPSK), quadrature phase shift keying (QPSK), M-phase shift keying (M-PSK), and M-quadrature amplitude modulation (M-QAM)). The multi-antenna transmitting processor 471 performs digital spatial precoding, comprising codebook-based precoding and non-codebook-based precoding, and beamforming processing on the encoded and modulated symbols to generate one or more spatial streams. The transmitting processor 416 then maps each spatial stream to a subcarrier, multiplexes with a reference signal (e.g., pilot frequency) in a time domain and/or frequency domain, and then uses an inverse fast Fourier transform (IFFT) to produce a physical channel carrying a time-domain multi-carrier symbol stream. The multi-antenna transmitting processor 471 then performs a sending analog precoding/beamforming operation on the time-domain multi-carrier symbol stream. Each transmitting device 418 converts a baseband multi-carrier symbol stream provided by the multi-antenna transmitting processor 471 into a radio frequency stream, and then provides the radio frequency stream to different antennas 420.

In the transmission from the second communication device 410 to the first communication device 450, at the first communication device 450, each receiving device 454 receives a signal through a corresponding antenna 452 thereof. Each receiving device 454 recovers information modulated onto a radio frequency carrier, converts the radio frequency stream into a baseband multi-carrier symbol stream and provides the baseband multi-carrier symbol stream to the receiving processor 456. The receiving processor 456 and the multi-antenna receiving processor 458 implement various signal processing functions of the L1 layer. The multi-antenna receiving processor 458 performs a receiving analog precoding/beamforming operation on the baseband multi-carrier symbol stream from the receiving device 454. The receiving processor 456 uses a fast Fourier transform (FFT) to convert the baseband multi-carrier symbol stream from the time domain to the frequency domain after the receiving analog precoding/beamforming operation. In the frequency domain, a physical layer data signal and a reference signal are demultiplexed by the receiving processor 456, wherein the reference signal will be used for channel estimation, and any spatial stream destined for the first communication device 450 is recovered from the data signal after multi-antenna detection in the multi-antenna receiving processor 458. The symbols on each spatial stream are demodulated and recovered in the receiving processor 456, and soft decisions are generated. The receiving processor 456 then decodes and deinterleaves the soft decisions to recover upper-layer data and control signals transmitted by the second communication device 410 on the physical channel. The upper-layer data and the control signals are then provided to the controller/processor 459. The controller/processor 459 implements the functions of the L2 layer. The controller/processor 459 may be associated with the memory 460 which stores program codes and data. The memory 460 may be referred to as a computer-readable medium. In the transmission from the second communication device 410 to the first communication device 450, the controller/processor 459 provides demultiplexing between transport and logical channels, packet reassembly, decryption, header decompression, and control signal processing to recover the upper-layer data packets from the core network. The upper-layer data packets are then provided to all protocol layers above the L2 layer. Various control signals may also be provided to an L3 for L3 processing.

In transmission from the first communication device 450 to the second communication device 410, at the first communication device 450, the upper-layer data packets are provided to the controller/processor 459 using the data source 467. The data source 467 represents all protocol layers above the L2 layer. Similar to the transmission function at the second communication device 410 described in the transmission from the second communication device 410 to the first communication device 450, the controller/processor 459 implements header compression, encryption, packet segmentation and reordering, and multiplexing between logical and transport channels based on radio resource allocation, and implements the functions of the L2 layer for the user plane and the control plane. The controller/processor 459 is also responsible for retransmission of lost packets and signaling to the second communication device 410. The transmitting processor 468 performs modulation mapping and channel coding processing, and the multi-antenna transmitting processor 457 performs digital multi-antenna spatial precoding, comprising codebook-based precoding and non-codebook-based precoding, and beamforming processing. Then, the transmitting processor 468 modulates the produced spatial stream into a multi-carrier/single-carrier symbol stream, which is provided to different antennas 452 by the transmitting device 454 after analog precoding/beamforming operations in the multi-antenna transmitting processor 457. Each transmitting device 454 first converts the baseband symbol stream provided by the multi-antenna transmitting processor 457 into a radio frequency symbol stream, and then provides the radio frequency symbol stream to the antenna 452.

In the transmission from the first communication device 450 to the second communication device 410, the function at the second communication device 410 is similar to the receiving function at the first communication device 450 described in the transmission from the second communication device 410 to the first communication device 450. Each receiving device 418 receives a radio frequency signal through a corresponding antenna 420 thereof, converts the received radio frequency signal into a baseband signal, and provides the baseband signal to the multi-antenna receiving processor 472 and the receiving processor 470. The receiving processor 470 and the multi-antenna receiving processor 472 jointly implement the functions of the L1 layer. The controller/processor 475 implements the functions of the L2 layer. The controller/processor 475 may be associated with the memory 476 which stores program codes and data. The memory 476 may be referred to as a computer-readable medium. In the transmission from the first communication device 450 to the second communication device 410, the controller/processor 475 provides demultiplexing between transport and logical channels, packet reassembly, decryption, header decompression, and control signal processing to recover upper-layer data packets from the UE450. The upper-layer data packets from the controller/processor 475 may be provided to the core network.

As one embodiment, the first communication device 450 comprises: at least one processor and at least one memory, the at least one memory comprising a computer program code; and the at least one memory and the computer program code are configured to be used together with the at least one processor, the first communication device 450 at least: initiates a first random access procedure; in the first random access procedure, transmits a first signal; monitors second signaling, wherein the first signal is used for triggering the second signaling, and the second signaling is used for determining a first time length; after the first signal is transmitted, increases a first counter by 1; and in response to the first counter reaching a target integer, executes a first action set, wherein whether the first action set comprises determining a radio link failure depends on uplink transmission to which the first time length is applied, wherein if the first time length is applied to only part of uplink transmission for a first cell, the first action set does not comprise determining the radio link failure, if the first time length is applied to the uplink transmission for the first cell, the first action set comprises determining the radio link failure, the first cell is an SpCell, and the uplink transmission comprises at least one of PUCCH transmission or PUSCH transmission or SRS transmission.

As one embodiment, the first communication device 450 comprises: a memory storing a computer-readable instruction program, wherein the computer-readable instruction program generates actions when executed by at least one processor, and the actions comprise: initiating a first random access procedure; in the first random access procedure, transmitting a first signal; monitoring second signaling, wherein the first signal is used for triggering the second signaling, and the second signaling is used for determining a first time length; after the first signal is transmitted, increasing a first counter by 1; and in response to the first counter reaching a target integer, executing a first action set, wherein whether the first action set comprises determining a radio link failure depends on uplink transmission to which the first time length is applied, wherein if the first time length is applied to only part of uplink transmission for a first cell, the first action set does not comprise determining the radio link failure, if the first time length is applied to the uplink transmission for the first cell, the first action set comprises determining the radio link failure, the first cell is an SpCell, and the uplink transmission comprises at least one of PUCCH transmission or PUSCH transmission or SRS transmission.

As one embodiment, the second communication device 410 comprises: at least one processor and at least one memory, the at least one memory comprising a computer program code; and the at least one memory and the computer program code are configured to be used together with the at least one processor. The second communication device 410 at least: monitors first signal; and determines whether to transmit second signaling according to whether the first signal is received, wherein the first signal is used for triggering the second signaling, and the second signaling is used for determining a first time length, wherein the first signal is transmitted in a first random access procedure; the first random access procedure is initiated by a sender of the first signal; after the first signal is transmitted, a first counter is increased by 1; the first counter reaching a target integer is used for determining that a first action set is executed by the sender of the first signal, wherein whether the first action set comprises determining a radio link failure depends on uplink transmission to which the first time length is applied, wherein if the first time length is applied to only part of uplink transmission for a first cell, the first action set does not comprise determining a radio link failure, if the first time length is applied to the uplink transmission for the first cell, the first action set comprises determining the radio link failure, the first cell is an SpCell, and the uplink transmission comprises at least one of PUCCH transmission or PUSCH transmission or SRS transmission.

As one embodiment, the second communication device 410 comprises: a memory storing a computer-readable instruction program, wherein the computer-readable instruction program generates actions when executed by at least one processor, and the actions comprise: monitoring a first signal; and determining whether to transmit second signaling according to whether the first signal is received, wherein the first signal is used for triggering the second signaling, and the second signaling is used for determining a first time length, wherein the first signal is transmitted in a first random access procedure; the first random access procedure is initiated by a sender of the first signal; after the first signal is transmitted, a first counter is increased by 1; the first counter reaching a target integer is used for determining that a first action set is executed by the sender of the first signal, wherein whether the first action set comprises determining a radio link failure depends on uplink transmission to which the first time length is applied, wherein if the first time length is applied to only part of uplink transmission for a first cell, the first action set does not comprise determining a radio link failure, if the first time length is applied to the uplink transmission for the first cell, the first action set comprises determining the radio link failure, the first cell is an SpCell, and the uplink transmission comprises at least one of PUCCH transmission or PUSCH transmission or SRS transmission.

As one embodiment, at least one of the antenna 452, the receiving device 454, the receiving processor 456, and the controller/processor 459 is used for monitoring the second signaling.

As one embodiment, at least one of the antenna 452, the receiving device 454, the receiving processor 456, and the controller/processor 459 is used for receiving second signaling.

As one embodiment, at least one of the antenna 420, the transmitting device 418, the transmitting processor 416, and the controller/processor 475 is used for sending the second signaling.

As one embodiment, at least one of the antenna 452, the transmitting device 454, the transmitting processor 468, and the controller/processor 459 is used for sending the first signal.

As one embodiment, at least one of the antenna 420, the receiving device 418, the receiving processor 470, and the controller/processor 475 is used for receiving the first signal.

As one embodiment, at least one of the antenna 452, the receiving device 454, the receiving processor 456, and the controller/processor 459 is used for receiving first DCI.

As one embodiment, at least one of the antenna 420, the transmitting device 418, the transmitting processor 416, and the controller/processor 475 is used for sending first DCI.

As one embodiment, the first communication device 450 corresponds to a first node in the present application.

As one embodiment, the second communication device 410 corresponds to a second node in the present application.

As one embodiment, the first communication device 450 is one piece of user equipment.

As one embodiment, the first communication device 450 is one base station device.

As one embodiment, the second communication device 410 is one piece of user equipment.

As one embodiment, the second communication device 410 is one base station device.

### Embodiment 5

Embodiment 5 illustrates a flowchart of wireless signal transmission according to one embodiment of the present application, as shown in FIG. 5. It should be particularly noted that the order in this example does not limit the signal transmission order and implementation order in the present application.

For a **first node U01,** in step S5101, a first random access procedure is initiated; in step S5102, in the first random access procedure, a first signal is transmitted; in step S5103, second signaling is monitored, wherein the first signal is used for triggering the second signaling, and the second signaling is used for determining a first time length; in step S5104, the second signaling is received; in step S5105, after the first signal is transmitted, a first counter is increased by 1; in step S5106, it is determined that the first counter reaches a target integer; in step S5107, whether the first time length is applied to uplink transmission for a first cell or to only part of the uplink transmission for the first cell is determined; in step S5108(a), if the first time length is applied to the uplink transmission for a first cell, in response to the first counter reaching a target integer, a first action set is executed, wherein the first action set comprises determining a radio link failure; and in step S5108(b), if the first time length is applied to only part of the uplink transmission for a first cell, in response to the first counter reaching a target integer, a first action set is executed, wherein the first action set does not comprise determining a radio link failure.

For a **second node N02,** in step S5201, the first signal is received; and in step S5202, the second signaling is transmitted.

In Embodiment 5, the first cell is an SpCell; and the uplink transmission comprises at least one of PUCCH transmission or PUSCH transmission or SRS transmission.

As one embodiment, the first node U01 is one piece of user equipment.

As one embodiment, the first node U01 is one base station device.

As one embodiment, the first node U01 is one relay device.

As one embodiment, the second node N02 is one base station device.

As one embodiment, the second node N02 is one piece of user equipment.

As one embodiment, the second node N02 is one relay device.

As one embodiment, the second node N02 is a Master Node (MN).

As one embodiment, the second node N02 is a Secondary Node (SN).

As one embodiment, the first node U01 is one piece of user equipment, and the second node N02 is one base station device.

As one embodiment, the first node U01 is one piece of user equipment, and the second node N02 is one piece of user equipment.

As one embodiment, the first node U01 is one base station device, and the second node N02 is one base station device.

As one embodiment, the second node N02 is a maintenance base station of the first cell.

As one embodiment, the second node N02 comprises at least a portion of a maintenance base station of the first cell and at least a portion of a maintenance base station of the second cell.

As one embodiment, the second node N02 comprises one TRP of a maintenance base station of the first cell and one TRP of a maintenance base station of the second cell.

As one embodiment, the second node N02 comprises a first sub-node and a second sub-node.

As one embodiment, the second node N02 comprises at least a first sub-node and a second sub-node.

As one embodiment, both the first sub-node and the second sub-node belong to the first cell.

As one embodiment, the first sub-node belongs to the first cell, and the second sub-node belongs to the second cell.

As one embodiment, a first resource set is associated with the first sub-node, and a second resource set is associated with the second sub-node.

As one embodiment, a recipient of the first signal is the first sub-node, and a sender of the second signaling is the first sub-node.

As one embodiment, a recipient of the first signal is the first sub-node, and a sender of the second signaling is the second sub-node.

As one embodiment, a recipient of the first signal is the second sub-node, and a sender of the second signaling is the first sub-node.

As one embodiment, a recipient of the first signal is the second sub-node, and a sender of the second signaling is the second sub-node.

As one embodiment, the step S5201 is optional.

As one embodiment, the step S5201 exists.

As one embodiment, the step S5201 does not exist.

As one embodiment, the dotted block F5.1 is optional.

As one embodiment, the dotted block F5.1 exists.

As one embodiment, the dotted block F5.1 does not exist.

As one embodiment, prior to the step S5201, the second node N02 monitors the first signal.

As one embodiment, prior to the step S5201, the second node N02 determines whether to transmit second signaling according to whether the first signal is received.

As one embodiment, if the first signal is received, the second node N02 transmits the second signaling; and if the first signal is not received, the second signaling is not transmitted.

As one embodiment, the first signal is received.

As one embodiment, the first signal is not received.

As one embodiment, the second signaling is transmitted.

As one embodiment, the second signaling is not transmitted.

As one embodiment, the second signaling is received.

As one embodiment, the second signaling is not received.

### Embodiment 6

Embodiment 6 illustrates a flowchart in which first DCI is used for triggering a first random access procedure according to one embodiment of the present application, as shown in FIG. 6. It should be particularly noted that the order in this example does not limit the signal transmission order and implementation order in the present application.

For a **first node U01,** in step S6101, first DCI is received, wherein the first DCI is used for triggering the first random access procedure; and in step S6102, the first random access procedure is initiated.

For **a third** node N03, in step S6301, the first DCI is transmitted.

In Embodiment 6, the first DCI being used for triggering the first random access procedure is used for determining that a first time length is applied to only part of uplink transmission for a first cell; and the first time length is applied to the only part of the uplink transmission for the first cell.

As one embodiment, the third node N03 is one base station device.

As one embodiment, the third node N03 is one piece of user equipment.

As one embodiment, the third node N03 is one relay device.

As one embodiment, the third node N03 is the second node N02.

As one embodiment, the third node N03 is the first sub-node in the second node N02.

As one embodiment, the third node N03 is the second sub-node in the second node N02.

As one embodiment, the third node N03 is not the second node N02.

As one embodiment, the third node N03 is not any TRP in the second node N02.

As one embodiment, only when the first random access procedure is triggered by the first DCI, the first action set does not comprise determining a radio link failure.

As one embodiment, when at least the first random access procedure is triggered by the first DCI, the first action set does not comprise determining a radio link failure.

As one embodiment, if the first random access procedure is not triggered by the first DCI, the first action set does not comprise determining a radio link failure.

As one embodiment, the first DCI is received on the first cell.

As one embodiment, the first DCI is used for a Physical Downlink Control Channel (PDCCH) order.

As one embodiment, the first DCI is one PDCCH order.

As one embodiment, the first DCI is one PDCCH order used for triggering the first random access procedure.

As one embodiment, the first DCI is one PDCCH order used for triggering a TA for the only part of the uplink transmission for the first cell.

As one embodiment, the first DCI is identified by a first C-RNTI.

As one embodiment, the first DCI is scrambled by a first C-RNTI.

As one embodiment, the first DCI is addressed to a first C-RNTI.

As one embodiment, CRC of the first DCI is scrambled by a first C-RNTI.

As one embodiment, the first C-RNTI is a Cell Radio Network Temporary Identifier (C-RNTI) of the first node U01 in the first cell.

As one embodiment, the first C-RNTI is a C-RNTI of the first node U01 in a cell group to which the first cell belongs.

As one embodiment, a format of the first DCI is DCI format 1_1.

As one embodiment, a format of the first DCI is DCI format 1_0.

As one embodiment, the first DCI comprises at least one Identifier for DCI formats field, and the one Identifier for DCI formats field is set to 1.

As one embodiment, the first DCI comprises one Frequency Domain Resource Assignment field, and the one Frequency Domain Resource Assignment field is set to all 1.

As one embodiment, the first DCI indicates an air interface resource for the first signal.

As one sub-embodiment of this embodiment, the first DCI indicates an air interface resource for the first signal.

As one sub-embodiment of this embodiment, the first DCI comprises at least one of one Random Access Preamble Index field, or one UL (Uplink)/SUL (Supplementary Uplink) Indicator field, or one SS/PBCH Index field, or one PRACH Mask Index field.

As one embodiment, the first DCI does not indicate an air interface resource for the first signal.

As one sub-embodiment of this embodiment, the first DCI does not comprise any one of the Random Access Preamble Index field, or the UL/SUL Indicator field, or the SS/PBCH Index field, or the PRACH Mask Index field.

As one embodiment, the first DCI comprises a first DCI field, and the first DCI field is used for determining that the first time length is applied to the only part of the uplink transmission for the first cell.

As one sub-embodiment of this embodiment, the first DCI field is not any one of one Random Access Preamble index field, or one UL/SUL indicator field, or one SS/PBCH index field, or one PRACH Mask index field.

As one sub-embodiment of this embodiment, the first DCI field is used for indicating one resource set.

As one sub-embodiment of this embodiment, the first DCI field is used for indicating the first resource set in the first resource set and the second resource set.

As one sub-embodiment of this embodiment, the first DCI field is used for indicating one TAG.

As one sub-embodiment of this embodiment, the first DCI field indicates one TAG ID.

As one sub-embodiment of this embodiment, the first DCI field occupies at least 1 bit.

As one sub-embodiment of this embodiment, the first DCI field occupies 2 bits.

As one sub-embodiment of this embodiment, the first DCI field occupies 3 bits.

As one sub-embodiment of this embodiment, the first DCI field occupies 4 bits.

As one embodiment, the first DCI field is not included in the first DCI.

As one embodiment, the first field is included in the second signaling.

As one embodiment, the first field is not included in the second signaling.

As one embodiment, an air interface resource for the first signal is used for transmitting the first signal.

As one embodiment, an air interface resource for the first signal comprises at least one of a time domain resource or a frequency domain resource or a code domain resource for the first signal.

As one embodiment, an air interface resource for the first signal comprises an index of the first signal.

As one embodiment, an air interface resource for the first signal comprises an uplink carrier associated with the first signal.

As one embodiment, an air interface resource for the first signal comprises a PRACH mask of the first signal.

As one embodiment, an air interface resource for the first signal comprises an SSB associated with the first signal.

As one embodiment, the first DCI being used for triggering the first random access procedure is used for determining that the first time length is applied to the only part of the uplink transmission for the first cell.

As one embodiment, if the first DCI is used for triggering the first random access procedure, the first time length is applied to the only part of the uplink transmission for the first cell.

### Embodiment 7

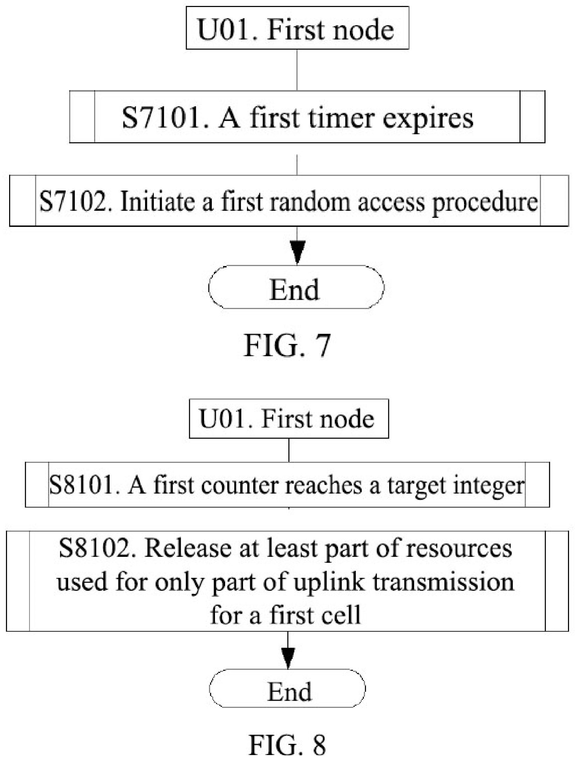

Embodiment 7 illustrates a flowchart in which the expiration of a first timer is used for triggering a first random access procedure according to one embodiment of the present application, as shown in FIG. 7. It should be particularly noted that the order in this example does not limit the signal transmission order and implementation order in the present application.

For a **first node U01,** in step S7101, a first timer expires, the expiration of the first timer being used for triggering the first random access procedure; in step S7102, the first random access procedure is initiated.

In Embodiment 7, the first timer expiring being used for triggering the first random access procedure is used for determining that the first time length is applied to the only part of the uplink transmission for the first cell; and the first time length is applied to the only part of the uplink transmission for the first cell.

As one embodiment, the first random access procedure is initiated at least after the first timer expires.

As one embodiment, the first random access procedure is initiated when the first timer expires.

As one embodiment, the first random access procedure is initiated when the first timer expires and there is pending uplink data.

As one embodiment, the first timer is one timeAlignmentTimer.

As one embodiment, if the first timer is running, a physical layer associated with the only part of the uplink transmission for the first cell is synchronised, and if the first timer is not running, a physical layer associated with the only part of the uplink transmission for the first cell is not synchronised.

As one embodiment, if the first timer is running, a physical layer associated with the first TAG is synchronised, and if the first timer is not running, a physical layer associated with the first TAG is not synchronised.

As one embodiment, if the first timer is running, a physical layer associated with the first resource set is synchronised, and if the first timer is not running, a physical layer associated with the first resource set is not synchronised.

As one embodiment, if the expiration of the first timer is used for triggering the first random access procedure, the first time length is applied to the only part of the uplink transmission for the first cell.

As one embodiment, the first timer is configured to a first TAG, and the only part of the uplink transmission for the first cell is configured with an identifier of the first TAG.

As one embodiment, a running state of the first timer is used for determining whether uplink time for the only part of the uplink transmission for the first cell is aligned.

As one embodiment, a running state of the first timer is not used for determining whether uplink time for the uplink transmission other than the only part of the uplink transmission for the first cell is aligned.

As one embodiment, a running state of the second timer is used for determining whether uplink time for the uplink transmission other than the only part of the uplink transmission for the first cell is aligned.

### Embodiment 8

Embodiment 8 illustrates a flowchart in which a first action set comprises releasing at least part of the resources used for only part of uplink transmission for a first cell according to one embodiment of the present application, as shown in FIG. 8. It should be particularly noted that the order in this example does not limit the signal transmission order and implementation order in the present application.

For **a first node U01,** in step S8101, the first counter reaches a target integer; and in step S8102, in response to the first counter reaching a target integer, at least part of the resources used for the only part of the uplink transmission for the first cell is released.

In Embodiment 8, the first time length is applied to the only part of the uplink transmission for the first cell.

As one embodiment, if the first time length is applied to the only part of the uplink transmission for the first cell, the first action set comprises releasing at least part of the resources used for the only part of the uplink transmission for the first cell.

As one embodiment, the first action set does not comprise releasing any resource used for the uplink transmission other than the only part of the uplink transmission for the first cell.

As one embodiment, the first action set comprises partially resetting an MAC entity, and the behavior of partially resetting an MAC entity comprises releasing at least part of the resources used for the only part of the uplink transmission for the first cell.

As one embodiment, the behavior of releasing at least part of the resources used for the only part of the uplink transmission for the first cell refers to: releasing all resources used for the only part of the uplink transmission for the first cell.

As one embodiment, the behavior of releasing at least part of the resources used for the only part of the uplink transmission for the first cell refers to: releasing part of the resources used for the only part of the uplink transmission for the first cell.

As one embodiment, the meaning of the behavior of releasing at least part of the resources used for the only part of the uplink transmission for the first cell comprises: notifying an RRC sublayer to release all resources used for the only part of the uplink transmission for the first cell.

As one embodiment, the meaning of the behavior of releasing at least part of the resources used for the only part of the uplink transmission for the first cell comprises: notifying a physical layer to stop the only part of the uplink transmission for the first cell.

As one embodiment, the resources used for the only part of the uplink transmission for the first cell refer to: PUCCH resources.

As one embodiment, the resources used for the only part of the uplink transmission for the first cell refer to: PUSCH resources.

As one embodiment, the resources used for the only part of the uplink transmission for the first cell refer to: SRS resources.

As one embodiment, the resources used for the only part of the uplink transmission for the first cell refer to: configured downlink assignments and configured uplink grants.

### Embodiment 9

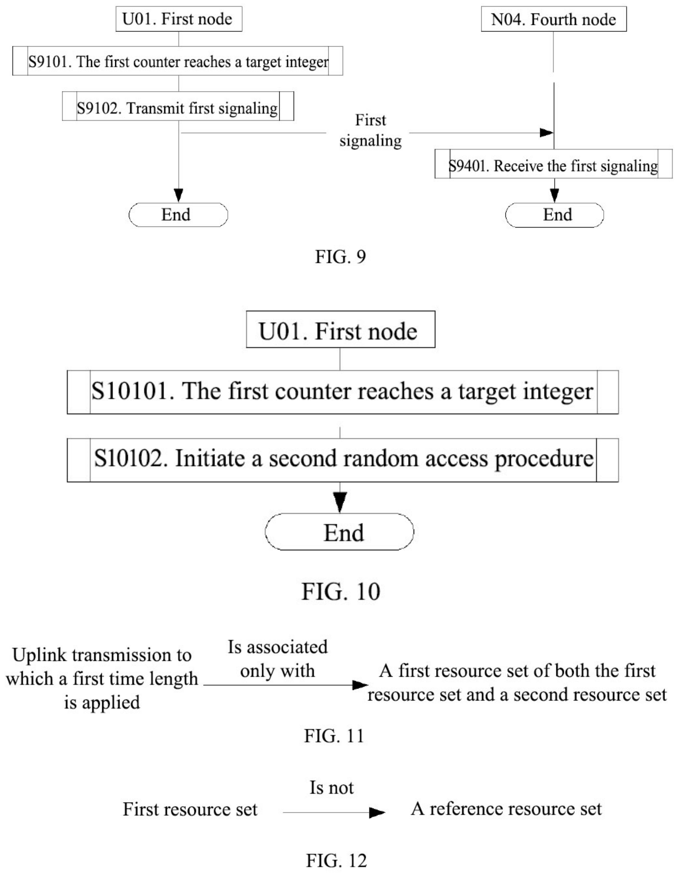

Embodiment 9 illustrates a flowchart of a first action set comprising first signaling according to one embodiment of the present application, as shown in FIG. 9. It should be particularly noted that the order in this example does not limit the signal transmission order and implementation order in the present application.

For **a first node U01,** in step S9101, the first counter reaches a target integer; and in step S9102, in response to the first counter reaching a target integer, first signaling is transmitted.

For a **fourth node N04,** in step S9401, the first signaling is received.

In Embodiment 9, the first signaling is used for indicating that the first random access procedure is not successfully completed; and the first time length is applied to the only part of the uplink transmission for the first cell.

As one embodiment, the fourth node N04 is one base station device.

As one embodiment, the fourth node N04 is one piece of user equipment.

As one embodiment, the fourth node N04 is one relay device.

As one embodiment, the fourth node N04 is an MN.

As one embodiment, the fourth node N04 is an SN.

As one embodiment, the fourth node N04 is the second node N02.

As one embodiment, the fourth node N04 is the first sub-node in the second node N02.

As one embodiment, the fourth node N04 is the second sub-node in the second node N02.

As one embodiment, the fourth node N04 is not the second node N02.

As one embodiment, the fourth node N04 is not any TRP in the second node N02.

As one embodiment, if the first time length is applied to the only part of the uplink transmission for the first cell, the first action set comprises transmitting first signaling; and the first signaling is used for indicating that the first random access procedure is not successfully completed.

As one embodiment, the first action set does not comprise determining a radio link failure, and the first action set comprises transmitting the first signaling.

As one embodiment, the first action set does not comprise determining a radio link failure, and the first action set comprises transmitting the first signaling, and the first action set comprises releasing at least part of the resources used for the only part of the uplink transmission for the first cell.

As one embodiment, the first action set does not comprise releasing at least part of the resources used for the only part of the uplink transmission for the first cell.

As one embodiment, the first signaling is used for initiating a failure information procedure.

As one embodiment, the first signaling is used for reporting failure information.

As one embodiment, the first signaling is used for indicating the failure of the first random access procedure.

As one embodiment, the first signaling is used for notifying the network of information about the failure of the first random access procedure.

As one embodiment, the first signaling is one piece of UCI.

As one embodiment, the first signaling is one MAC CE.

As one embodiment, the first signaling is one RRC message.

As one sub-embodiment of this embodiment, the first signaling comprises one FailureInformation message.

As one sub-embodiment of this embodiment, the first signaling is one FailureInformation message.

As one sub-embodiment of this embodiment, the first signaling is transmitted through SRB1.

As one sub-embodiment of this embodiment, the first signaling is transmitted through SRB3.

As one sub-embodiment of this embodiment, if the first cell is a PCell, the first signaling is transmitted through SRB1; and the first signaling is one FailureInformation message.

As one sub-embodiment of this embodiment, if the first cell is a PSCell and SRB3 is configured, the first signaling is transmitted through SRB3; and the first signaling is one FailureInformation message.

As one sub-embodiment of this embodiment, if the first cell is a PSCell and SRB3 is not configured, the first signaling is transmitted through SRB1; and the first signaling is one FailureInformation message, and the first signaling is embedded in one ULInformationTransferMRDC message.

As one embodiment, the first signaling comprises a first target field.

As one sub-embodiment of this embodiment, the first target field is used for indicating a failure cause.

As one sub-embodiment of this embodiment, the first target field is used for indicating the failure of the first random access procedure.

As one sub-embodiment of this embodiment, the first target field is set to randomAccessProblem.

As one sub-embodiment of this embodiment, the first target field is set to a value whose name comprises at least one of random or Access or Problem.

As one sub-embodiment of this embodiment, the first target field is set to a value whose name comprises at least one of rach or failure.

As one sub-embodiment of this embodiment, the first target field is one failureType field.

As one embodiment, the first signaling comprises a second target field.

As one sub-embodiment of this embodiment, the second target field is used for indicating the first resource set.

As one sub-embodiment of this embodiment, the second target field is used for indicating a TAG associated with the first resource set.

As one sub-embodiment of this embodiment, the second target field is used for indicating only part of the uplink transmission for the first cell.

As one embodiment, the first signaling comprises a third target field.

As one sub-embodiment of this embodiment, the third target field is used for indicating the number of times a PDCCH order is received.

As one sub-embodiment of this embodiment, the third target field is used for indicating the number of times a PDCCH order is received in the first random access procedure.

As one sub-embodiment of this embodiment, the third target field is used for indicating the number of times a PDCCH order with the same format is received in the first random access procedure.

As one embodiment, the first signaling comprises a fourth target field.

As one sub-embodiment of this embodiment, the fourth target field is used for indicating whether the first timer is running.

As one sub-embodiment of this embodiment, the fourth target field is used for indicating whether the first timer is running when the first random access procedure is initiated.

As one sub-embodiment of this embodiment, the fourth target field is used for indicating whether the first timer is running when the first counter reaches the target integer.

As one embodiment, the first signaling comprises a fifth target field.

As one sub-embodiment of this embodiment, the fifth target field is used for indicating the number of times a Preamble is transmitted in the first random access procedure.

As one sub-embodiment of this embodiment, the fifth target field is used for indicating the number of times a Preamble is transmitted consecutively in the first random access procedure.

As one embodiment, at least the first target field is included in the first signaling.

As one embodiment, at least one of the first target field or the second target field or the third target field or the fourth target field or the fifth target field is included in the first signaling.

As one embodiment, the behavior of transmitting the first signaling comprises: delivering the first signaling to a lower layer.

As one embodiment, the first signaling is set before the first signaling is transmitted.

As one embodiment, the first signaling is set before the first signaling is delivered to a lower layer.

As one embodiment, the behavior of setting the first signaling comprises: setting at least one of the first target field or the second target field or the third target field or the fourth target field or the fifth target field in the first signaling.

As one embodiment, the lower layer refers to a protocol layer below an RRC sublayer.

As one embodiment, the lower layer comprises at least one of a PDCP sublayer or an RLC sublayer or an MAC sublayer or a physical layer.

### Embodiment 10

Embodiment 10 illustrates a flowchart of a first action set comprising initiating a second random access procedure according to one embodiment of the present application, as shown in FIG. 10. It should be particularly noted that the order in this example does not limit the signal transmission order and implementation order in the present application.

For **a first node U01,** in step S10101, the first counter reaches a target integer; and in step S10102, in response to the first counter reaching a target integer, a second random access procedure is initiated.

In Embodiment 10, the second random access procedure is not the first random access procedure; and the first time length is applied to the only part of the uplink transmission for the first cell.

As one embodiment, if the first time length is applied to the only part of the uplink transmission for the first cell, the first action set comprises initiating a second random access procedure; and the second random access procedure is not the first random access procedure.

As one embodiment, the first action set does not comprise determining a radio link failure, and the first action set comprises initiating a second random access procedure.

As one embodiment, the first action set does not comprise determining a radio link failure and the first action set comprises initiating a second random access procedure, and the first action set comprises transmitting the first signaling.

As one embodiment, the first action set does not comprise determining a radio link failure, and the first action set comprises initiating a second random access procedure, and the first action set comprises releasing at least part of the resources used for the only part of the uplink transmission for the first cell.

As one embodiment, the first action set does not comprise determining a radio link failure, and the first action set comprises initiating a second random access procedure, and the first action set comprises transmitting the first signaling, and the first action set comprises releasing at least part of the resources used for the only part of the uplink transmission for the first cell.

As one embodiment, the first action set does not comprise transmitting the first signaling.

As one embodiment, the first action set does not comprise releasing at least part of the resources used for the only part of the uplink transmission for the first cell.

As one embodiment, in the second random access procedure, a second signal is transmitted; the second signal is associated with the second resource set; and the first signal is associated with the first resource set.

As one embodiment, the second signal is used for triggering one piece of signaling, and the one piece of signaling comprises the second time length.

As one embodiment, in response to the first counter reaching a target integer, a second random access procedure is initiated if the second timer is not running.

As one embodiment, the second signal is used for calculating the second time length.

As one embodiment, the second signal is used for calculating the first time length and the second time length.

### Embodiment 11

Embodiment 11 illustrates a schematic diagram of uplink transmission to which a first time length is applied being associated only with a first resource set of both the first resource set and a second resource set according to one embodiment of the present application, as shown in FIG. 11.

In Embodiment 11, the uplink transmission to which the first time length is applied is associated only with a first resource set of both the first resource set and a second resource set; at least one resource is included in the first resource set; at least one resource is included in the second resource set; the first resource set and the second resource set are both associated with the first cell; and the first time length is applied to the only part of the uplink transmission for the first cell.

As one embodiment, the meaning of one uplink transmission being associated with one resource set refers to: downlink timing of the one uplink transmission is associated with the one resource set.

As one embodiment, the meaning of one uplink transmission being associated with one resource set refers to: a path loss reference signal used for the one uplink transmission is associated with the one resource set.

As one embodiment, the meaning of one uplink transmission being associated with one resource set refers to: a timing advance amount used for the one uplink transmission is associated with the one resource set.

As one embodiment, the meaning of one uplink transmission being associated with one resource set refers to: uplink timing used for the one uplink transmission is associated with the one resource set.

As one embodiment, the meaning of one uplink transmission being associated with one resource set refers to: the one uplink transmission belongs to the one resource set.

As one embodiment, the meaning of one uplink transmission being associated with one resource set refers to: the one uplink transmission and the one resource set correspond to the same TRP.

As one embodiment, the meaning of one uplink transmission being associated with one resource set refers to: the one uplink transmission is related to the one resource set.

As one embodiment, any resource in the first resource set is different from any resource in the second resource set.

As one embodiment, at least one resource in the first resource set is different from any resource in the second resource set.

As one embodiment, the first resource set and the second resource set respectively correspond to different TAs.

As one embodiment, the uplink transmission to which the first time length is applied is associated only with the first resource set of both the first resource set and the second resource set; and the uplink transmission to which the second time length is applied is associated only with the second resource set of both the first resource set and the second resource set.

As one embodiment, the first resource set is associated with a first BFD-RS set, and the second resource set is associated with a second BFD-RS set.

As one embodiment, each RS resource in the first BFD-RS set belongs to the first cell, and each RS resource in the second BFD-RS set belongs to the first cell.

As one embodiment, each RS resource in the first BFD-RS set belongs to the first cell, and each RS resource in the second BFD-RS set belongs to the second cell.

As one embodiment, the first resource set and the second resource set are respectively one TAG.

As one embodiment, the first resource set is a first TAG, and the second resource set is a second TAG.

As one embodiment, the first resource set and the second resource set are associated with different TAGs respectively.

As one embodiment, the first resource set and the second resource set are configured to different TAGs, respectively.

As one embodiment, the first resource set is associated with a first TAG, and the second resource set is associated with a second TAG.

As one embodiment, the first resource set is configured to a first TAG, and the second resource set is configured to a second TAG.

As one embodiment, the first resource set is configured with an identifier of a first TAG, and the second resource set is configured with an identifier of a second TAG.

As one embodiment, any resource in the first resource set and any resource in the second resource set are uplink resources.

As one embodiment, any resource in the first resource set and any resource in the second resource set are downlink resources.

As one embodiment, any resource in the first resource set and any resource in the second resource set are downlink RS resources.

As one embodiment, the downlink Reference Signal (RS) resource is an SSB.

As one embodiment, the SSB is an SS (Synchronization Signal)/PBCH (Physical Broadcast Channel).

As one embodiment, the SSB is a synchronization signal block.

As one embodiment, the downlink RS resource is a (Channel State Information)-RS.

As one embodiment, the downlink RS resource is an SSB or a CSI-RS.

As one embodiment, each resource in the first resource set is one TCI state, and each resource in the second resource set is one TCI state.

As one embodiment, each resource in the first resource set is one UL TCI state, and each resource in the second resource set is one UL TCI state.

As one embodiment, each resource in the first resource set is one joint TCI state or a UL TCI state, and each resource in the second resource set is one joint TCI state or a UL TCI state.

As one embodiment, each resource in the first resource set is one joint TCI state, and each resource in the second resource set is one joint TCI state.

As one embodiment, each resource in the first resource set is one CORESET Pool, and each resource in the second resource set is one CORESET Pool.

As one embodiment, both the first resource set and the second resource set are configured to the first cell.

As one embodiment, the first cell is configured with the first resource set and the second resource set.

As one embodiment, both the first TAG and the second TAG are associated with a first timer.

As one sub-embodiment of this embodiment, the first timer is configured to the first TAG.

As one sub-embodiment of this embodiment, the first timer is configured to the first TAG and the second TAG.

As one sub-embodiment of this embodiment, the first timer is used for controlling the time during which the MAC entity considers the uplink time associated with the first TAG and the second TAG to be aligned.

As one embodiment, the first TAG is associated with a first timer, and the second TAG is associated with a second timer.

As one sub-embodiment of this embodiment, the first timer is configured to the first TAG, and the second timer is configured to the second TAG.

As one sub-embodiment of this embodiment, the first timer is used for controlling the time during which the MAC entity considers the uplink time associated with the first TAG to be aligned.

As one sub-embodiment of this embodiment, the second timer is used for controlling the time during which the MAC entity considers the uplink time associated with the second TAG to be aligned.

### Embodiment 12

Embodiment 12 illustrates a schematic diagram of a first resource set not being a reference resource set according to one embodiment of the present application, as shown in FIG. 12.

In Embodiment 12, the uplink transmission to which the first time length is applied is associated only with a first resource set of both the first resource set and a second resource set; at least one resource is included in the first resource set; at least one resource is included in the second resource set; the first resource set and the second resource set are both associated with the first cell; the first time length is applied to the only part of the uplink transmission for the first cell; and the first resource set is not a reference resource set.

As one embodiment, only when the first resource set is not the reference resource set, the first action set does not comprise determining a radio link failure; and the first time length is applied to the only part of the uplink transmission for the first cell.

As one embodiment, when at least the first resource set is not the reference resource set, the first action set does not comprise determining a radio link failure; and the first time length is applied to the only part of the uplink transmission for the first cell.

As one embodiment, if the first resource set is the reference resource set, the first action set comprises determining a radio link failure.

As one embodiment, the reference resource set is default in both the first resource set and the second resource set.

As one sub-embodiment of this embodiment, the reference resource set is pre-defined.

As one sub-embodiment of this embodiment, the reference resource set is not indicated by an RRC message.

As one sub-embodiment of this embodiment, the reference resource set is a reference resource set with an index equal to 0.

As one sub-embodiment of this embodiment, the reference resource set is a reference resource set with an index equal to 1.

As one sub-embodiment of this embodiment, the reference resource set corresponds to one index 0.

As one sub-embodiment of this embodiment, the reference resource set corresponds to one index 1.

As one sub-embodiment of this embodiment, the reference resource set is a PTAG.

As one sub-embodiment of this embodiment, the reference resource set is associated with a PTAG.

As one sub-embodiment of this embodiment, the reference resource set is a TAG with a TAG ID equal to 0.

As one sub-embodiment of this embodiment, the reference resource set is associated with a TAG with a TAG ID equal to 0.

As one embodiment, the reference resource set is indicated in both the first resource set and the second resource set.

As one sub-embodiment of this embodiment, the reference resource set is configurable.

As one sub-embodiment of this embodiment, one downlink signaling is used for indicating the reference resource set in both the first resource set and the second resource set.

As one sub-embodiment of this embodiment, the one downlink signaling is one RRC message.

As one sub-embodiment of this embodiment, the one downlink signaling is one MAC CE.

As one sub-embodiment of this embodiment, the one downlink signaling is one piece of DCI.

### Embodiment 13

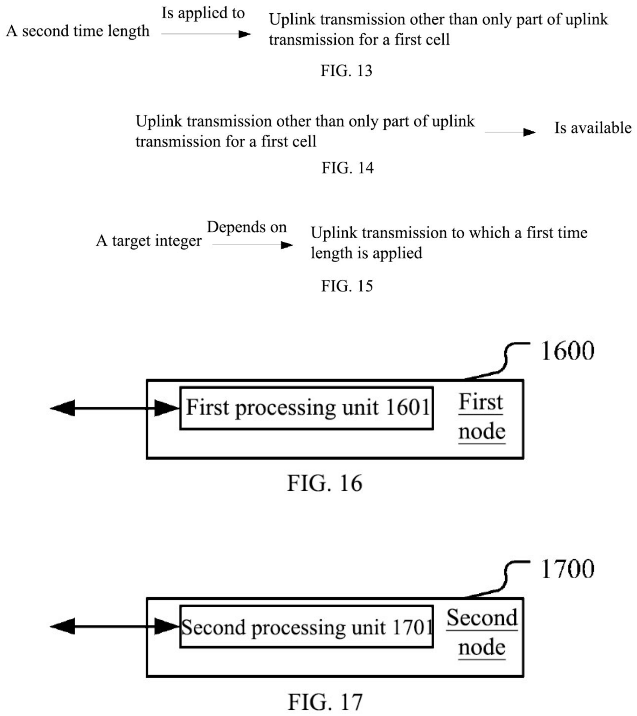

Embodiment 13 illustrates a schematic diagram of a second time length being applied to uplink transmission other than only part of uplink transmission for a first cell according to one embodiment of the present application, as shown in FIG. 13.

In Embodiment 13, a second time length is applied to the uplink transmission other than the only part of the uplink transmission for the first cell; the second time length is not the first time length; and the first time length is applied to the only part of the uplink transmission for the first cell.

As one embodiment, the second time length is one time adjustment amount.

As one embodiment, the second time length is a time by which the start time of an uplink frame is advanced relative to the start time of a reference downlink frame.

As one embodiment, the second time length is a time by which the start time of an uplink frame for the uplink transmission other than the only part of the uplink transmission for the first cell is advanced relative to the start time of a reference downlink frame.

As one embodiment, third signaling is received, and the third signaling is used for determining the second time length.

As one embodiment, the third signaling is used for calculating the first time length.

As one embodiment, one index second T_{A} included in the third signaling is used for determining the second time length.

As one embodiment, the third signaling is one RRC message.

As one embodiment, the third signaling is one MAC RAR.

As one embodiment, the third signaling is one MAC CE.

As one embodiment, the third signaling is one Timing Advance Command MAC CE.

As one embodiment, the third signaling is one Absolute Timing Advance Command MAC CE.

As one embodiment, the third signaling is one piece of DCI.

As one embodiment, at least a Timing Advance Command field is included in the third signaling.

As one embodiment, only one Timing Advance Command field is included in the third signaling.

As one embodiment, at least one Timing Advance Command field is included in the third signaling.

As one embodiment, the at least one Timing Advance Command field is 1 Timing Advance Command field.

As one embodiment, the at least one Timing Advance Command field is 2 Timing Advance Command fields.

As one embodiment, the at least one Timing Advance Command field is more than 2 Timing Advance Command fields.

As one embodiment, only one index second T_{A} is included in the third signaling, and the only one index second T_{A} is used for determining the first time length.

As one embodiment, at least one index T_{A} is included in the third signaling, and one index T_{A} of the at least one index second T_{A} is used for determining the first time length.

As one embodiment, the at least one index T_{A} is 1 index T_{A}.

As one embodiment, the at least one index T_{A} is 2 index T_{A}.

As one embodiment, the at least one index T_{A} is more than 2 index T_{A}.

As one embodiment, the third signaling is the second signaling.

As one embodiment, the third signaling is not the second signaling.

As one embodiment, in response to the third signaling being received, a Timing Advance Command in the third signaling is applied.

As one embodiment, in response to the third signaling being received, a Timing Advance Command for the second TAG in the third signaling is applied.

As one embodiment, in response to the third signaling being received, a Timing Advance Command for each TAG in the third signaling is applied.

As one embodiment, the first time length is used for determining the second time length.

As one embodiment, the second time length is equal to the sum of (the first time length and a first time offset).

As one embodiment, the first time offset is configured.

As one embodiment, the first time offset is calculated by UE.

As one embodiment, the first time offset is indicated by a base station.

As one embodiment, the second time length is (second N_{TA} + second N_{TA} offset) × second T_{c};and the third signaling is used for determining the second N_{TA}.

As one embodiment, the second time length is (second N_{TA} + second N_{TA offset} + third N_{TA} offset) × second T_{c};and the third signaling is used for determining the second N_{TA}.

As one embodiment, the second time length is (first N_{TA} + first N_{TA offset} + third N_{TA} offset) × T_{c}.

As one embodiment, the second N_{TA} = second T_{A} · 16 · 64/2^{second µ}.

As one embodiment, the second N_{TA} = second N_{TA_old} + (second T_{A} - 31) · 16 · 64/2^{second µ}.

As one embodiment, the second µ is for the only part of the uplink transmission for the first cell.

As one embodiment, the second µ is used for determining a subcarrier spacing.

As one embodiment, the second µ is used for determining transmission numerologies.

As one embodiment, the second T_{c} is for the only part of the uplink transmission for the first cell.

As one embodiment, the second T_{c} is a basic timing unit.

As one embodiment, the second T_{c} is a basic timing unit defined in 3GPP TS 38.211.

As one embodiment, the third N_{TA offset} is an integer.

As one embodiment, the third N_{TA offset} is configured.

As one embodiment, the third N_{TA offset} is calculated by a UE.

As one embodiment, the third N_{TA offset} is indicated by a base station.

As one embodiment, the second µand the first µare the same.

As one embodiment, the second µ is different from the first µ.

As one embodiment, the second N_{TA-old} and the first N_{TA_old} are the same.

As one embodiment, the second N_{TA_old} is different from the first N_{TA_old}.

As one embodiment, the second N_{TA} and the first N_{TA} are the same.

As one embodiment, the second N_{TA} is different from the first N_{TA}.

As one embodiment, the second T_{c} and the first T_{c} are the same.

As one embodiment, the second T_{c} is different from the first T_{c}.

As one embodiment, the first cell is configured with only a first TAG.

As one embodiment, both the first resource set and the second resource set are associated with the first TAG.

As one embodiment, the first cell is configured with a first TAG and a second TAG.

As one embodiment, the first cell is configured with an identifier of the first TAG and an identifier of the second TAG.

As one embodiment, the only part of the uplink transmission for the first cell is configured to the first TAG; and the uplink transmission other than the only part of the uplink transmission for the first cell is configured to the second TAG.

As one embodiment, the only part of the uplink transmission for the first cell is configured with an identifier of the first TAG; and the uplink transmission other than the only part of the uplink transmission of the first cell is configured with an identifier of the second TAG.

As one embodiment, the first resource set is associated with the first TAG; and the second resource set is associated with the second TAG.

As one embodiment, both the first TAG and the second TAG are associated with the first timer.

As one sub-embodiment of this embodiment, a PUCCH for the first cell is released when the first timer expires.

As one sub-embodiment of this embodiment, a PUCCH for the first TAG and the second TAG is released when the first timer expires.

As one sub-embodiment of this embodiment, a PUCCH for all serving cells is released when the first timer expires.

As one sub-embodiment of this embodiment, an SRS for the first cell is released when the first timer expires.

As one sub-embodiment of this embodiment, an SRS for the first TAG and the second TAG is released when the first timer expires.

As one sub-embodiment of this embodiment, an SRS for all serving cells is released when the first timer expires.

As one sub-embodiment of this embodiment, configured downlink assignments and configured uplink grants for the first cell are released when the first timer expires.

As one sub-embodiment of this embodiment, configured downlink assignments and configured uplink grants for the first TAG and the second TAG are released when the first timer expires.

As one sub-embodiment of this embodiment, configured downlink assignments and configured uplink grants for all serving cells are released when the first timer expires.

As one sub-embodiment of this embodiment, PUSCH resources for semi-persistent CSI reporting for the first cell are released when the first timer expires.

As one sub-embodiment of this embodiment, PUSCH resources for semi-persistent CSI reporting for the first TAG and the second TAG are released when the first timer expires.

As one sub-embodiment of this embodiment, PUSCH resources for semi-persistent CSI reporting for all serving cells are released when the first timer expires.

As one embodiment, the first TAG is associated with the first timer, and the second TAG is associated with the second timer.

As one sub-embodiment of this embodiment, part of PUCCHs for the first cell are released when the first timer expires.

As one sub-embodiment of this embodiment, a PUCCH for the first TAG is released when the first timer expires.

As one sub-embodiment of this embodiment, part of SRSs for the first cell are released when the first timer expires.

As one sub-embodiment of this embodiment, an SRS for the first TAG is released when the first timer expires.

As one sub-embodiment of this embodiment, part of configured downlink assignments and configured uplink grants for the first cell are released when the first timer expires.

As one sub-embodiment of this embodiment, configured downlink assignments and configured uplink grants for the first TAG are released when the first timer expires.

As one sub-embodiment of this embodiment, part of PUSCH resources for semi-persistent CSI reporting for the first cell are released when the first timer expires.

As one sub-embodiment of this embodiment, PUSCH resources for semi-persistent CSI reporting for the first TAG are released when the first timer expires.

### Embodiment 14

Embodiment 14 illustrates a schematic diagram of uplink transmission other than only part of uplink transmission for a first cell being available according to one embodiment of the present application, as shown in FIG. 14.

In Embodiment 14, the uplink transmission other than the only part of the uplink transmission for the first cell is available; and the first time length is applied to the only part of the uplink transmission for the first cell.

As one embodiment, only when the uplink transmission other than the only part of the uplink transmission for the first cell is available, the first action set does not comprise determining a radio link failure.

As one embodiment, when at least the uplink transmission other than the only part of the uplink transmission for the first cell is available, the first action set does not comprise determining a radio link failure.

As one embodiment, if the uplink transmission other than the only part of the uplink transmission for the first cell is not available, the first action set comprises determining a radio link failure.

As one embodiment, the "available" refers to being configured.

As one embodiment, the "available" refers to being indicated.

As one embodiment, the "available" refers to being allowed.

As one embodiment, the "available" refers to being set up.

As one embodiment, the "available" refers to being activated.

As one embodiment, the "available" refers to being available.

As one embodiment, the "available" refers to being capable of being used.

As one embodiment, the "available" refers to not being prohibited.

As one embodiment, the "available" refers to being enabled.

As one embodiment, the uplink transmission other than the only part of the uplink transmission for the first cell being available refers to: L1 is synchronised for the uplink transmission other than the only part of the uplink transmission for the first cell.

As one embodiment, if L1 is synchronised for a second TAG, L1 is synchronised for the uplink transmission other than the only part of the uplink transmission for the first cell; and the uplink transmission other than the only part of the uplink transmission of the first cell is configured with an identifier of the second TAG.

As one embodiment, if a second timer is running, L1 is synchronised for the uplink transmission other than the only part of the uplink transmission for the first cell; the second timer is configured to the second TAG; and the uplink transmission other than the only part of the uplink transmission of the first cell is configured with an identifier of the second TAG.

As one embodiment, the "L1 is synchronised" refers to: a physical layer is synchronised.

As one embodiment, the "L1 is synchronised" refers to: L1 is considered synchronised.

As one embodiment, the "L1 is synchronised" refers to: uplink time aligned.

### Embodiment 15

Embodiment 15 illustrates a schematic diagram of a target integer depending on uplink transmission to which a first time length is applied according to one embodiment of the present application, as shown in FIG. 15.

In Embodiment 15, the target integer depends on the uplink transmission to which the first time length is applied; if the first time length is applied to the only part of the uplink transmission for the first cell, the target integer is a first integer; if the first time length is applied to the uplink transmission for the first cell, the target integer is a second integer; and the second integer is not the first integer.

As one embodiment, a preambleTransMax is set to the first integer; and the first time length is applied to the only part of the uplink transmission for the first cell.

As one embodiment, a preambleTransMax is set to the second integer; and the first time length is applied to the uplink transmission for the first cell.

As one embodiment, the second integer is configurable.

As one embodiment, the second integer is preconfigured.

As one embodiment, the second integer is one non-negative integer.

As one embodiment, the second integer is configured by a preambleTransMax field.

As one embodiment, the first integer is configurable.

As one embodiment, the first integer is preconfigured.

As one embodiment, the first integer is one non-negative integer.

As one embodiment, the first integer and the second integer are configured by two RRC fields, respectively.

As one embodiment, the second integer is configured by one preambleTransMax field; and the first integer is configured by an RRC field other than a preambleTransMax field.

As one embodiment, the first integer is equal to (the sum of the second integer and a first offset).

As one embodiment, the first offset is configurable.

As one embodiment, the first offset is preconfigured.

As one embodiment, the first offset is one non-negative integer.

### Embodiment 16

Embodiment 16 illustrates a structural block diagram of a processing device used in a first node according to one embodiment of the present application, as shown in FIG. 16. In FIG. 16, the processing device 1600 in the first node comprises a first processing unit 1601.

The first processing unit 1601 initiates a first random access procedure; in the first random access procedure, transmitting a first signal; monitoring second signaling, wherein the first signal is used for triggering the second signaling, and the second signaling is used for determining a first time length; after the first signal is transmitted, increasing a first counter by 1; and in response to the first counter reaching a target integer, executing a first action set, wherein whether the first action set comprises determining a radio link failure depends on uplink transmission to which the first time length is applied.

In Embodiment 16, if the first time length is applied to only part of uplink transmission for a first cell, the first action set does not comprise determining a radio link failure; if the first time length is applied to the uplink transmission for the first cell, the first action set comprises determining the radio link failure, the first cell is an SpCell, and the uplink transmission comprises at least one of PUCCH transmission or PUSCH transmission or SRS transmission.

As one embodiment, the uplink transmission to which the first time length is applied is associated only with a first resource set of both the first resource set and a second resource set; at least one resource is included in the first resource set; at least one resource is included in the second resource set; the first resource set and the second resource set are both associated with the first cell; and the first time length is applied to the only part of the uplink transmission for the first cell.

As one embodiment, the first resource set is not a reference resource set; and the reference resource set is default in both the first resource set and the second resource set, or the reference resource set is indicated in both the first resource set and the second resource set.

As one embodiment, the first processing unit 1601 receives first DCI, the first DCI being used for triggering the first random access procedure;

wherein the first DCI being used for triggering the first random access procedure is used for determining that the first time length is applied to the only part of the uplink transmission for the first cell; and the first time length is applied to the only part of the uplink transmission for the first cell.

As one embodiment, the processing device comprises the first processing unit 1601, wherein a first timer expires, and the first timer expiring is used for triggering the first random access procedure, wherein the first timer expiring is used for triggering the first random access procedure is used for determining that the first time length is applied to the only part of the uplink transmission for the first cell; and the first time length is applied to the only part of the uplink transmission for the first cell.

As one embodiment, if the first time length is applied to the only part of the uplink transmission for the first cell, the first action set comprises releasing at least part of the resources used for the only part of the uplink transmission for the first cell.

As one embodiment, if the first time length is applied to the only part of the uplink transmission for the first cell, the first action set comprises transmitting first signaling; and the first signaling is used for indicating that the first random access procedure is not successfully completed.

As one embodiment, if the first time length is applied to the only part of the uplink transmission for the first cell, the first action set comprises initiating a second random access procedure; and the second random access procedure is not the first random access procedure.

As one embodiment, a second time length is applied to uplink transmission other than the only part of the uplink transmission for the first cell; the second time length is not the first time length; and the first time length is applied to the only part of the uplink transmission for the first cell.

As one embodiment, the uplink transmission other than the only part of the uplink transmission for the first cell is available; and the first time length is applied to the only part of the uplink transmission for the first cell.

As one embodiment, the target integer depends on the uplink transmission to which the first time length is applied; if the first time length is applied to the only part of the uplink transmission for the first cell, the target integer is a first integer; if the first time length is applied to the uplink transmission for the first cell, the target integer is a second integer; and the second integer is not the first integer.

As one embodiment, the first processing unit 1601 comprises the antenna 452, the receiving device 454, the multi-antenna receiving processor 458, the receiving processor 456, the controller/processor 459, the memory 460, and the data source 467 in FIG. 4 of the present application.

As one embodiment, the first processing unit 1601 comprises the antenna 452, the receiving device 454, the multi-antenna receiving processor 458, and the receiving processor 456 in FIG. 4 of the present application.

As one embodiment, the first processing unit 1601 comprises the antenna 452, the receiving device 454, and the receiving processor 456 in FIG. 4 of the present application.

As one embodiment, the first processing unit 1601 comprises the antenna 452, the transmitting device 454, the multi-antenna transmitting processor 457, the transmitting processor 468, the controller/processor 459, the memory 460, and the data source 467 in FIG. 4 of the present application.

As one embodiment, the first processing unit 1601 comprises the antenna 452, the transmitting device 454, the multi-antenna transmitting processor 457, and the transmitting processor 468 in FIG. 4 of the present application.

As one embodiment, the first processing unit 1601 comprises the antenna 452, the transmitting device 454, and the transmitting processor 468 in FIG. 4 of the present application.

### Embodiment 17

Embodiment 17 illustrates a structural block diagram of a processing device used in a second node according to one embodiment of the present application, as shown in FIG. 17. In FIG. 17, the processing device 1700 in the second node comprises a second processing unit 1701.

The second processing unit 1701 monitors a first signal; and determines whether to transmit second signaling according to whether the first signal is received, wherein the first signal is used for triggering the second signaling, and the second signaling is used for determining a first time length.

In Embodiment 17, the first signal is transmitted in the first random access procedure; the first random access procedure is initiated by a sender of the first signal; after the first signal is transmitted, a first counter is increased by 1; the first counter reaching a target integer is used for determining that a first action set is executed by the sender of the first signal, wherein whether the first action set comprises determining a radio link failure depends on uplink transmission to which the first time length is applied, wherein if the first time length is applied to only part of uplink transmission for a first cell, the first action set does not comprise determining a radio link failure, if the first time length is applied to the uplink transmission for the first cell, the first action set comprises determining the radio link failure, the first cell is an SpCell, and the uplink transmission comprises at least one of PUCCH transmission or PUSCH transmission or SRS transmission.

As one embodiment, the uplink transmission to which the first time length is applied is associated only with a first resource set of both the first resource set and a second resource set; at least one resource is included in the first resource set; at least one resource is included in the second resource set; the first resource set and the second resource set are both associated with the first cell; and the first time length is applied to the only part of the uplink transmission for the first cell.

As one embodiment, the first resource set is not a reference resource set; and the reference resource set is default in both the first resource set and the second resource set, or the reference resource set is indicated in both the first resource set and the second resource set.

As one embodiment, the second processing unit 1701 transmits first DCI, the first DCI being used for triggering the first random access procedure; wherein the first DCI being used for triggering the first random access procedure is used for determining that the first time length is applied to the only part of the uplink transmission for the first cell; and the first time length is applied to the only part of the uplink transmission for the first cell.

As one embodiment, a first timer expiring is used for triggering the first random access procedure; and the first timer expiring being used for triggering the first random access procedure is used for determining that the first time length is applied to the only part of the uplink transmission for the first cell; and the first time length is applied to the only part of the uplink transmission for the first cell.

As one embodiment, if the first time length is applied to the only part of the uplink transmission for the first cell, the first action set comprises releasing at least part of the resources used for the only part of the uplink transmission for the first cell.

As one embodiment, if the first time length is applied to the only part of the uplink transmission for the first cell, the first action set comprises transmitting first signaling; and the first signaling is used for indicating that the first random access procedure is not successfully completed.

As one embodiment, if the first time length is applied to the only part of the uplink transmission for the first cell, the first action set comprises initiating a second random access procedure; and the second random access procedure is not the first random access procedure.

As one embodiment, a second time length is applied to uplink transmission other than the only part of the uplink transmission for the first cell; the second time length is not the first time length; and the first time length is applied to the only part of the uplink transmission for the first cell.

As one embodiment, the uplink transmission other than the only part of the uplink transmission for the first cell is available; and the first time length is applied to the only part of the uplink transmission for the first cell.

As one embodiment, the target integer depends on the uplink transmission to which the first time length is applied; if the first time length is applied to the only part of the uplink transmission for the first cell, the target integer is a first integer; if the first time length is applied to the uplink transmission for the first cell, the target integer is a second integer; and the second integer is not the first integer.

As one embodiment, the second processing unit 1701 comprises the antenna 420, the transmitting device 418, the multi-antenna transmitting processor 471, the transmitting processor 416, the controller/processor 475, and the memory 476 in FIG. 4 of the present application.

As one embodiment, the second processing unit 1701 comprises the antenna 420, the transmitting device 418, the multi-antenna transmitting processor 471, and the transmitting processor 416 in FIG. 4 of the present application.

As one embodiment, the second processing unit 1701 comprises the antenna 420, the transmitting device 418, and the transmitting processor 416 in FIG. 4 of the present application.

As one embodiment, the second processing unit 1701 comprises the antenna 420, the receiving device 418, the multi-antenna receiving processor 472, the receiving processor 470, the controller/processor 475, and the memory 476 in FIG. 4 of the present application.

As one embodiment, the second processing unit 1701 comprises the antenna 420, the receiving device 418, the multi-antenna receiving processor 472, and the receiving processor 470 in FIG. 4 of the present application.

As one embodiment, the second processing unit 1701 comprises the antenna 420, the receiving device 418, and the receiving processor 470 in FIG. 4 of the present application.

### Embodiment 18

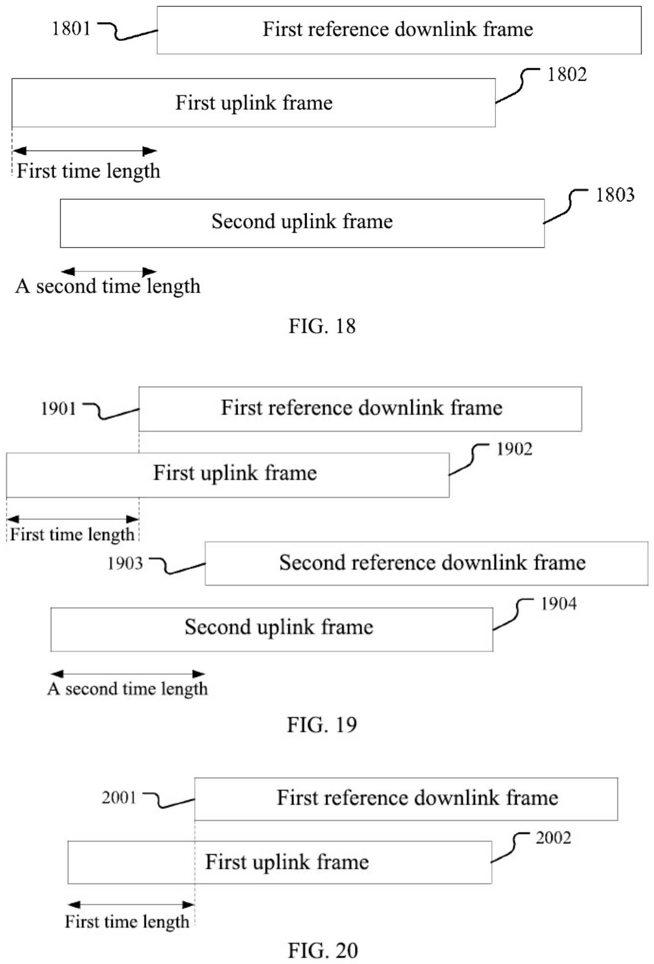

Embodiment 18 illustrates a schematic diagram of a first time length and a second time length according to one embodiment of the present application, as shown in FIG. 18. In FIG. 18, block 1801 represents a first reference downlink frame, block 1802 represents a first uplink frame, and block 1803 represents a second uplink frame.

In Embodiment 18, a time by which the start time of the first uplink frame is advanced relative to the start time of the first reference downlink frame is the first time length, and a time by which the start time of the second uplink frame is advanced relative to the start time of the first reference downlink frame is the second time length.

As one embodiment, it is particularly noted that FIG. 18 does not limit the chronological order of the start time of the first uplink frame and the start time of the second uplink frame.

As one embodiment, the start time of the first uplink frame is earlier than the start time of the second uplink frame, and the first time length is greater than the second time length.

As one embodiment, the start time of the first uplink frame is later than the start time of the second uplink frame, and the first time length is less than the second time length.

As one embodiment, the start time of the first uplink frame and the start time of the second uplink frame are the same, and the first time length is equal to the second time length.

As one embodiment, both the first uplink frame and the second uplink frame belong to the first cell; and the first reference downlink frame belongs to the first cell.

As one embodiment, the first uplink frame belongs to the first cell, and the second uplink frame belongs to the second cell; and the first reference downlink frame belongs to the first cell.

As one embodiment, the first uplink frame belongs to the first cell, and the second uplink frame belongs to the second cell; and the first reference downlink frame belongs to the second cell.

As one embodiment, one downlink frame belonging to one cell refers to the one downlink frame being from the one cell.

As one embodiment, one downlink frame belonging to one cell refers to the one downlink frame being a downlink frame in the one cell.

As one embodiment, one downlink frame belonging to one cell refers to the one downlink frame being received on the one cell.

As one embodiment, one downlink frame belonging to one cell refers to the one downlink frame being transmitted by the one cell.

### Embodiment 19

Embodiment 19 illustrates a schematic diagram of a first time length and a second time length according to another embodiment of the present application, as shown in FIG. 19. In FIG. 19, block 1901 represents a first reference downlink frame, block 1902 represents a first uplink frame, block 1903 represents a second reference downlink frame, and block 1904 represents a second uplink frame.

In Embodiment 19, a time by which the start time of the first uplink frame is advanced relative to the start time of the first reference downlink frame is the first time length, and a time by which the start time of the second uplink frame is advanced relative to the start time of the second reference downlink frame is the second time length; the first reference downlink frame is not the second reference downlink frame; and the first time length is applied to the only part of the uplink transmission for the first cell.

As one embodiment, it is particularly noted that FIG. 19 does not limit the chronological order of the start time of the first uplink frame and the start time of the second uplink frame, and

FIG. 19 does not limit the chronological order of the start time of the first reference downlink frame and the start time of the second reference downlink frame.

As one embodiment, the start time of the first reference downlink frame is earlier than the start time of the second reference downlink frame.

As one embodiment, the start time of the first reference downlink frame is later than the start time of the second reference downlink frame.

As one embodiment, the start time of the first reference downlink frame and the start time of the second reference downlink frame are the same.

As one embodiment, both the first uplink frame and the second uplink frame belong to the first cell; and the first reference downlink frame and the second reference downlink frame both belong to the first cell.

As one embodiment, the first uplink frame belongs to the first cell, and the second uplink frame belongs to the second cell; and the first reference downlink frame belongs to the first cell, and the second reference downlink frame belongs to the second cell.

### Embodiment 20

Embodiment 20 illustrates a schematic diagram of a first time length and a second time length according to yet another embodiment of the present application, as shown in FIG. 20. In

FIG. 20, block 2001 represents a first reference downlink frame, and block 2002 represents a first uplink frame.

In Embodiment 20, a time by which the start time of the first uplink frame is advanced relative to the start time of the first reference downlink frame is the first time length; and the first time length is applied to the uplink transmission for the first cell.

As one embodiment, the first uplink frame belongs to the first cell; and the first reference downlink frame belongs to the first cell.

Those of ordinary skill in the art can understand that all or part of the steps in the above method may be completed by instructing relevant hardware through a program, and the program may be stored in a computer-readable storage medium, such as a read-only memory, a hard disk, or an optical disk. Optionally, all or part of the steps in the above embodiments may also be implemented using one or more integrated circuits. Accordingly, each module unit in the above embodiments may be implemented in the form of hardware or in the form of a software function module, and the present application is not limited to any specific form of software and hardware combination. The user equipment, terminal and UE of the present application include, but are not limited to drones, communication modules on drones, remote-controlled aircrafts, aircrafts, small aircrafts, mobile phones, tablet computers, laptops, vehicle-mounted communication devices, radio sensors, Internet cards, Internet of Things terminals, RFID terminals, NB-IOT terminals, MTC (Machine Type Communication) terminals, eMTC (enhanced MTC) terminals, data cards, Internet cards, vehicle-mounted communication devices, low-cost mobile phones, low-cost tablet computers, and other wireless communication devices. The base station or system device in the present application includes, but is not limited to, macro cellular base stations, micro cellular base stations, Femtocells, relay base stations, gNBs (NR node B), TRPs (Transmitter Receiver Points), and other wireless communication devices.

The above are only preferred embodiments of the present application and are not used to limit the scope of protection of the present application. Any modification, equivalent replacement, improvement, etc. made within the spirit and principles of the present application should be comprised in the scope of protection of the present application.

## Claims

1. A first node used for wireless communication, **characterized by** comprising:
a first processing unit, initiating a first random access procedure; in the first random access procedure, transmitting a first signal; monitoring second signaling, wherein the first signal is used for triggering the second signaling, and the second signaling is used for determining a first time length; after the first signal is transmitted, increasing a first counter by 1; and in response to the first counter reaching a target integer, executing a first action set, wherein whether the first action set comprises determining a radio link failure depends on uplink transmission to which the first time length is applied;
wherein if the first time length is applied to only part of uplink transmission for a first cell, the first action set does not comprise determining a radio link failure, if the first time length is applied to the uplink transmission for the first cell, the first action set comprises determining the radio link failure, the first cell is an SpCell, and the uplink transmission comprises at least one of PUCCH transmission or PUSCH transmission or SRS transmission.

2. The first node according to claim 1, **characterized in that** the uplink transmission to which the first time length is applied is associated only with a first resource set of both the first resource set and a second resource set; at least one resource is included in the first resource set; at least one resource is included in the second resource set; the first resource set and the second resource set are both associated with the first cell; and the first time length is applied to the only part of the uplink transmission for the first cell.

3. The first node according to claim 2, **characterized in that** the first resource set is not a reference resource set; and the reference resource set is default in both the first resource set and the second resource set, or the reference resource set is indicated in both the first resource set and the second resource set.

4. The first node according to any one of claims 1 to 3, **characterized by** comprising:
the first processing unit receiving first DCI, the first DCI being used for triggering the first random access procedure;
wherein the first DCI being used for triggering the first random access procedure is used for determining that the first time length is applied to the only part of the uplink transmission for the first cell; and the first time length is applied to the only part of the uplink transmission for the first cell.

5. The first node according to any one of claims 1 to 4, **characterized by** comprising:
the first processing unit, and a first timer expiring, the expiration of the first timer being used for triggering the first random access procedure;
wherein the expiration of the first timer being used for triggering the first random access procedure is used for determining that the first time length is applied to the only part of the uplink transmission for the first cell; and the first time length is applied to the only part of the uplink transmission for the first cell.

6. The first node according to any one of claims 1 to 5, **characterized in that**, if the first time length is applied to the only part of the uplink transmission for the first cell, the first action set comprises releasing at least part of the resources used for the only part of the uplink transmission for the first cell.

7. The first node according to any one of claims 1 to 6, **characterized in that**, if the first time length is applied to the only part of the uplink transmission for the first cell, the first action set comprises transmitting first signaling; and the first signaling is used for indicating that the first random access procedure is not successfully completed.

8. The first node according to any one of claims 1 to 7, **characterized in that** a second time length is applied to uplink transmission other than the only part of the uplink transmission for the first cell; the second time length is not the first time length; and the first time length is applied to the only part of the uplink transmission for the first cell.

9. The first node according to any one of claims 1 to 8, **characterized in that** the uplink transmission other than the only part of the uplink transmission for the first cell is available; and the first time length is applied to the only part of the uplink transmission for the first cell.

10. A second node used for wireless communication, **characterized by** comprising:
a second processing unit, monitoring a first signal; and determining whether to transmit second signaling according to whether the first signal is received, wherein the first signal is used for triggering the second signaling, and the second signaling is used for determining a first time length;
wherein the first signal is transmitted in a first random access procedure; the first random access procedure is initiated by a sender of the first signal; after the first signal is transmitted, a first counter is increased by 1; the first counter reaching a target integer is used for determining that a first action set is executed by the sender of the first signal, wherein whether the first action set comprises determining a radio link failure depends on uplink transmission to which the first time length is applied; wherein if the first time length is applied to only part of uplink transmission for a first cell, the first action set does not comprise determining a radio link failure, if the first time length is applied to the uplink transmission for the first cell, the first action set comprises determining the radio link failure, the first cell is an SpCell, and the uplink transmission comprises at least one of PUCCH transmission or PUSCH transmission or SRS transmission.

11. A method used in a first node for wireless communication, **characterized by** comprising:
initiating a first random access procedure; in the first random access procedure, transmitting a first signal; monitoring second signaling, wherein the first signal is used for triggering the second signaling, and the second signaling is used for determining a first time length; after the first signal is transmitted, increasing a first counter by 1; and in response to the first counter reaching a target integer, executing a first action set, wherein whether the first action set comprises determining a radio link failure depends on uplink transmission to which the first time length is applied;
wherein if the first time length is applied to only part of uplink transmission for a first cell, the first action set does not comprise determining a radio link failure, if the first time length is applied to the uplink transmission for the first cell, the first action set comprises determining the radio link failure, the first cell is an SpCell, and the uplink transmission comprises at least one of PUCCH transmission or PUSCH transmission or SRS transmission.

12. A method used in a second node for wireless communication, **characterized by** comprising:
monitoring a first signal; and determining whether to transmit second signaling according to whether the first signal is received, wherein the first signal is used for triggering the second signaling, and the second signaling is used for determining a first time length;
wherein the first signal is transmitted in a first random access procedure; the first random access procedure is initiated by a sender of the first signal; after the first signal is transmitted, a first counter is increased by 1; the first counter reaching a target integer is used for determining that a first action set is executed by the sender of the first signal, wherein whether the first action set comprises determining a radio link failure depends on uplink transmission to which the first time length is applied; wherein if the first time length is applied to only part of uplink transmission for a first cell, the first action set does not comprise determining a radio link failure, if the first time length is applied to the uplink transmission for the first cell, the first action set comprises determining the radio link failure, the first cell is an SpCell, and the uplink transmission comprises at least one of PUCCH transmission or PUSCH transmission or SRS transmission.
